(19) Europäisches Patentamt / European Patent Office / Office européen des brevets

(11) **EP 4 395 042 A1**

(12) **EUROPEAN PATENT APPLICATION**
published in accordance with Art. 153(4) EPC

(43) Date of publication:
**03.07.2024 Bulletin 2024/27**

(21) Application number: **23773499.1**

(22) Date of filing: **14.02.2023**

(51) International Patent Classification (IPC):
**H01M 50/409** (2021.01)

(52) Cooperative Patent Classification (CPC):
**H01M 50/409; Y02E 60/10**

(86) International application number:
**PCT/CN2023/075964**

(87) International publication number:
**WO 2023/179248 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 25.03.2022 PCT/CN2022/083171
30.12.2022 PCT/CN2022/144349
04.01.2023 CN 202310015629

(71) Applicant: **Contemporary Amperex Technology Co., Limited**
**Ningde, Fujian 352100 (CN)**

(72) Inventors:
• **HONG, Haiyi**
 **Ningde, Fujian 352100 (CN)**
• **CHENG, Xiaonan**
 **Ningde, Fujian 352100 (CN)**
• **MA, Yanyun**
 **Ningde, Fujian 352100 (CN)**
• **YANG, Jianrui**
 **Ningde, Fujian 352100 (CN)**
• **WANG, Peng**
 **Ningde, Fujian 352100 (CN)**
• **CHAO, Lei**
 **Ningde, Fujian 352100 (CN)**
• **ZHENG, Yi**
 **Ningde, Fujian 352100 (CN)**
• **SUN, Chengdong**
 **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **SEPARATOR AND PREPARATION METHOD THEREFOR, BATTERY, AND ELECTRIC DEVICE**

(57) Disclosed in the present application are a separator and a preparation method therefor, a battery, and an electric device. The separator comprises a substrate and a coating; the coating is formed on at least part of the surface of the substrate; the coating comprises composite particles and a binder; the composite particles form protrusions on the surface of the coating; the composite particles comprise polyacrylate particles and inorganic particles, wherein an inorganic particle is provided between at least two polyacrylate particles; and the degree of cross-linking a of the composite particles and the mass degree of swelling b of the composite particles in an electrolyte satisfy the relations of a/b ≥1 and a≥75%.

FIG. 4

**Description**

**TECHNICAL FIELD**

This application pertains to the field of secondary battery technologies and specifically relates to a separator and a preparation method thereof, a battery, and an electric apparatus.

**BACKGROUND**

In the process of manufacturing cells of electrochemical devices, displacement of the electrode plates and separator during a transfer process is inevitable. Minor displacement can cause the electrode plates to wrinkle after full charge, significantly affecting the kinetic performance and degrading the safety performance of the cell. Severe displacement can cause the electrode plates to contact each other, resulting in the scrapping of dry cells. Therefore, an adhesive coating is usually applied on a separator. However, the existing adhesive coating is likely to cause low kinetic performance and safety performance of a battery.

**SUMMARY**

In view of the technical issue existing in the background, this application provides a separator, aiming to improve the kinetic performance and safety performance of existing batteries.

To achieve the foregoing objective, a first aspect of this application provides a separator including a substrate and a coating, where the coating is formed on at least a portion of surface of the substrate, and the coating includes composite particles and a binder, the composite particles form bulges on the surface of the coating, and the composite particles include polyacrylate particles and inorganic particles, where the inorganic particle is present between at least two of the polyacrylate particles, and crosslinking degree a of the composite particles and mass swelling degree b thereof in an electrolyte satisfy $a/b \geq 1$ and $a \geq 75\%$.

Compared with the prior art, this application includes at least the following beneficial effects: The coating of the separator in this application includes the composite particles and the binder, where the composite particles include polyacrylate particles and inorganic particles, and the inorganic particle is present between at least two of the polyacrylate particles. This can prevent adhesion of the composite particles in a high-temperature granulation process, improve ionic conductivity of the separator, and improve compressive modulus of the composite particles, so that suitable adhesion is present between the separator and electrode plates, and adhesion between separators is not too large in a transport process, without affecting the later use of the separator. In addition, the crosslinking degree a of the composite particles in this application and the mass swelling degree b thereof in the electrolyte satisfy $a/b \geq 1$ and $a \geq 75\%$. Therefore, composite particles satisfying the crosslinking degree condition have an appropriate compressive modulus, which can reduce blockage of the surface of the anode caused by the bulges on the coating of the separator with volume swelling during cycling, prolonging the cycle life of a battery. In addition, the composite particles undergo no excessive swelling in the electrolyte, thus avoiding excessive consumption of the electrolyte and reducing the blockage of the pores of the separator caused by excessive volume swelling of the composite particles. In addition, when high temperature is generated due to thermal runaway of the battery, the bulges formed by the composite particles on the surface of the coating can form a large-area glue film structure to reduce or block ion transport channels and delay thermal spread of the battery, thereby effectively improving the cycling performance and high-temperature safety performance of the battery.

In some embodiments of this application, a/b takes a value of 1-2.1, preferably 1-1.4. Thus, the safety performance and kinetic performance of the battery can be improved.

In some embodiments of this application, $D_v 50$ of the composite particles is $\geq 2.5 \, \mu m$, preferably $2.5 \, \mu m$-$10 \, \mu m$, and more preferably $3 \, \mu m$-$8 \, \mu m$. This helps form a bulge structure on the surface of the coating, thereby improving the kinetic performance of the cell.

In some embodiments of this application, a first agglomerate is present between the polyacrylate particles, and the first agglomerate includes at least two of the inorganic particles. Thus, the kinetic performance of the battery can be improved.

In some embodiments of this application, $0.01 \, \mu m \leq D_v 50$ of the first agglomerate $\leq D_v 10$ of the composite particles. Thus, the compressive modulus of the separator can be increased.

In some embodiments of this application, the composite particles include inorganic particles of primary particle morphology.

In some embodiments of this application, $D_v 50$ of the inorganic particles of the primary particle morphology is $0.01 \, \mu m$-$1 \, \mu m$, preferably $0.5 \, \mu m$-$1 \, \mu m$. Thus, it can be ensured that the composite particles are not fused during preparation to block the ion transport channels of the separator.

In some embodiments of this application, the composite particles include a second agglomerate, and the second agglomerate includes at least two of the polyacrylate particles.

In some embodiments of this application, $D_v50$ of the second agglomerate is 0.3 $\mu$m-5 $\mu$m, preferably 1 $\mu$m-2 $\mu$m.

In some embodiments of this application, the polyacrylate particles include polyacrylate particles of primary particle morphology and/or polyacrylate particles of secondary particle morphology.

In some embodiments of this application, $D_v50$ of the polyacrylate particle of the primary particle morphology is 50 nm-400 nm, preferably 100 nm-200 nm. Thus, overall ionic conductivity of the coating of the separator can be improved, the resistance of the separator can be reduced, and the kinetic performance of the battery cell can be improved.

In some embodiments of this application, $D_v50$ of the polyacrylate particles of the secondary particle morphology is 2 $\mu$m-15 $\mu$m, preferably 5 $\mu$m-8 $\mu$m. Thus, a buffer space can be provided for stress release between the electrode plates, preventing corners of a wound cell from breaking due to stress accumulation.

In some embodiments of this application, percentage of the inorganic particles in the composite particles is 1wt%-50wt%, optionally 1wt%-40wt%, more optionally 2wt%-15wt%, and most preferably 5wt%-15wt%. Thus, the separator obtains an appropriate compressive modulus.

In some embodiments of this application, two-side height of the bulges is 15 $\mu$m-60 $\mu$m. Thus, the safety performance of the battery can be improved, and the kinetic performance of the cell can be also improved.

In some embodiments of this application, the first agglomerate is present on surface of the bulge. Thus, the kinetic performance of the battery can be improved.

In some embodiments of this application, the polyacrylate particles have a glass transition temperature of 20°C-80°C, preferably 25°C-65°C.

In some embodiments of this application, the composite particles have an area coverage of 10%-25% on the coating. This can allow for an appropriate adhesive force between the coating of the separator and the electrode plates, improving the kinetic performance of the cell.

In some embodiments of this application, the inorganic particles include one or more of oxides of silicon, aluminum, calcium, zinc, and magnesium, and sodium sulfate, sodium benzoate, calcium carbonate, and modified materials thereof, optionally one or more of silicon dioxide, silica sol, aluminum oxide, zinc oxide, magnesium oxide, and sodium benzoate, and more optionally one or more of fumed silica, silicon micro-powder, aluminum oxide, and sodium benzoate.

In some embodiments of this application, the binder includes a binder polymer and a plasticizer. Thus, pressure sensitivity of the separator can be improved, thereby improving the kinetic performance of the cell.

In some embodiments of this application, the binder polymer includes a copolymer formed by at least one of the following first monomers, at least one of the following second monomers, at least one of the following third monomers, and at least one of the following reactive dispersants as follows:

first monomers, including acrylic acid, methacrylic acid, methyl methacrylate, tert-butyl methacrylate, isobornyl methacrylate, methylol acrylamide, acrylamide, styrene, and acrylonitrile;

second monomers, including C4-C22 alkyl acrylate, isobutyl acrylate, isooctyl acrylate, tert-butyl acrylate, 2-ethylhexyl acrylate (isooctyl), cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate 2-hydroxypropyl acrylate, ethyl ethylideneurea methacrylate, dicyclopentene ethoxy methacrylate, tetrahydrofuryl methacrylate, trifluoroethyl methacrylate, dimethylaminoethyl methacrylate, diethylaminoethyl methacrylate, ethyl ethylideneurea methacrylate, acryl methacrylate, dicyclopentene ethoxy methacrylate, tetrahydrofuryl methacrylate, and trifluoroethyl methacrylate;

third monomers, including 2-hydroxyethyl acrylate, 2-hydroxypropyl acrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, 3-methacryloxypropyltrimethoxysilane, N-methylolacrylamide, N-butoxymethyl(meth)acrylamide, diacetoneacrylamide, ethyl methacrylate acetoacetate, divinylbenzene, epoxy resin with an epoxy value of 0.35-0.50, and divinylbenzene; and

reactive dispersants, including polyvinyl alcohol, polypropyl alcohol, polypropylene glycol, polyethylene glycol, and polyvinyl acid alcohol.

This can ensure that the binder polymer has suitable swelling and adhesion, and the binder polymer has suitable swelling, pressure sensitivity, and adhesion properties, as well as a suitable elastic modulus, ensuring the shaping effect, kinetic performance, and safety of the cell.

In some embodiments of this application, the plasticizer includes at least one of glycerol C4-C10 alkyl diether, glycerol C4-C10 alkyl monoether, glycerol C4-C10 carboxylic acid monoester, glycerol C4-C10 carboxylic acid diester, propylene glycol C4-C10 alkyl monoether, and glycerol. In some embodiments of this application, a mass ratio of the composite particle to a solid content in the binder is (80-90):(5-20), preferably (85-90):(8-15). Thus, the cycling performance and safety performance of the battery can be improved.

In some embodiments of this application, the coating further includes organic particles, the organic particles include at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles of fluorine-containing alkenyl monomer units and vinyl monomer units, copolymer particles of fluorine-containing alkenyl monomer units and acrylate monomer units, copolymer particles of fluorine-containing alkenyl monomer units and acrylic monomer units, and modified compound particles of the homopolymers or copolymers; and the organic particles and the composite particles form the bulges on the surface of the pressure-sensitive coating. Thus, the cycling performance and safety performance of the battery can be improved.

In some embodiments of this application, the organic particles form a third agglomerate.

In some embodiments of this application, $D_v50$ of the third agglomerate is 5 μm-30 μm, preferably 5.0 μm-12 μm.

In some embodiments of this application, the third agglomerate includes organic particles of primary particle morphology, and a gap is present between adjacent two of the organic particles. Thus, the ionic conductivity of the separator can be improved.

In some embodiments of this application, $D_v50$ of the organic particles of the primary particle morphology is 50 nm-400 nm, preferably 100 nm-200 nm.

In some embodiments of this application, a mass ratio of the composite particles to the organic particles is (20-90):(0-70), preferably (45-90):(0-45). Thus, costs of the battery can be reduced, and the safety performance and cycling performance of the battery can be improved.

A second aspect of this application provides a method for preparing separator. The method includes the following steps: (1) providing a substrate; and (2) forming a coating including composite particles and a binder on at least a portion of surface of the substrate, where the composite particles form bulges on surface of the coating, the composite particles include polyacrylate particles and inorganic particles, the inorganic particle is present between at least two of the polyacrylate particles, and crosslinking degree a of the composite particles and mass swelling degree b thereof in an electrolyte satisfy $a/b \geq 1$ and $a \geq 75\%$.

Thus, the separator has an excellent compressive modulus and appropriate adhesion to electrode plates, thereby improving safety performance of a battery while improving cycling performance of a battery.

A third aspect of this application provides a battery including the separator according to the first aspect of this application or a separator prepared by using the method according to the second aspect of this application. The battery in this application includes the separator provided in this application or the separator prepared by using the method and therefore has excellent safety performance and kinetic performance.

A fourth aspect of this application provides an electric apparatus, including the battery according to the third aspect of this application, where the battery is configured to supply electrical energy. The electric apparatus in this application includes the battery provided in this application and therefore has at least the same advantages as the battery.

## BRIEF DESCRIPTION OF DRAWINGS

To describe the technical solutions of the embodiments of this application more clearly, the following briefly describes the accompanying drawings required for describing this application. Apparently, the accompanying drawings in the following descriptions show merely some embodiments of this application, and persons of ordinary skill in the art may still derive other drawings from the accompanying drawings without creative efforts.

FIG. 1 is a cross-sectional morphology (CP) image of a separator according to an embodiment of this application.
FIG. 2 is a cross-sectional morphology (CP) image of a separator according to another embodiment of this application.
FIG. 3 is a schematic diagram of winding of a cell after a separator according to an embodiment of this application is stacked with a positive electrode plate and a negative electrode plate.
FIG. 4 is a schematic structural diagram of a separator according to an embodiment of this application.
FIG. 5 is a schematic structural diagram of a battery according to an embodiment of this application.
FIG. 6 is a schematic structural diagram of a battery module according to an embodiment of this application.
FIG. 7 is a schematic structural diagram of a battery pack according to an embodiment of this application.
FIG. 8 is an exploded view of FIG. 7.
FIG. 9 is a schematic diagram of an implementation of an electric apparatus using a battery as a power source.

Description of reference signs:
1. secondary battery; 2. battery module; 3. battery pack; 4. upper box body; and 5. lower box body.

## DESCRIPTION OF EMBODIMENTS

The following further describes this application with reference to specific embodiments. It should be understood that these specific embodiments are merely intended to illustrate this application rather than to limit the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which ca be combined with any other point or individual numerical value or combined with another lower limit or upper limit to form a range not expressly recorded.

In the description of this specification, unless otherwise stated, the term "or (or)" is inclusive. That is, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In the descriptions of this specification, it should be noted that "more than" and "less than" are inclusive of the present number and that "more" in "one or more" means two or more than two, unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

Embodiments of this application provide a separator including a substrate and a coating, where the coating is formed on at least a portion of surface of the substrate, and the coating includes composite particles and a binder, the composite particles form bulges on surface of the coating, and the composite particles include polyacrylate particles and inorganic particles, where the inorganic particle is present between at least two of the polyacrylate particles, and crosslinking degree a of the composite particles and mass swelling degree b thereof in an electrolyte satisfy $a/b \geq 1$ and $a \geq 75\%$.

It should be noted that "the coating is formed on at least a portion of surface of the substrate" should be construed as the coating being in direct contact with the surface of the substrate, which is referred to as "direct contact"; or another layer being present between the surface of the substrate and the coating, which is referred to as "indirect contact". In addition, for "the inorganic particle is present between at least two of the polyacrylate particles, and the composite particles form bulges on surface of the coating", the separator may be cut along its thickness direction, and then the section of the coating of the separator is scanned using a scanning electron microscope (SEM). From the SEM image, it can be seen that the composite particles include polyacrylate particles and inorganic particles, with the inorganic particle present between some polyacrylate particles and the composite particles forming bulges on the surface of the coating.

Specifically, a ZEISS Sigma 300 scanning electron microscope is used for testing. Testing is conducted according to the following steps: first, cut a separator under test into 6 mm × 6 mm samples for testing, and clamp the sample for testing with two electrically-conductive and thermally-conductive copper foils; attach the sample being tested to the copper foil using a double-sided tape, press it with a 400 g flat iron block for 1 hour to make the gap between the sample being tested and the copper foil as small as possible, and cut edges with scissors; and attach it to a sample stage using a conductive adhesive such that the sample slightly protrudes from an edge of the sample stage. Then, load the sample stage into a sample holder and lock the sample stage in place, power on an IB-19500CP argon ion beam cross-section polisher and evacuate the polisher until 10 Pa-4 Pa, set argon flow to 0.15 MPa, voltage to 8 KV, and polishing time to 2 hours, adjust the sample stage to rocking mode to start polishing, and after polishing is completed, use the ZEISS Sigma 300 scanning electron microscope to obtain an ion beam cross-section polisher (CP) image of the sample being tested.

According to an example, for preparation of the composite particles of this application, reference may be made to the following steps:

(1) provide polymer monomers for preparing polyacrylate particles, and polymerize the polymer monomers to obtain a polyacrylate polymer;
(2) add solvent and inorganic particles to the polyacrylate polymer obtained in step (1), and perform stirring to obtain a mixed slurry; and
(3) dry the mixed slurry obtained in step (2) to remove the solvent, and then perform grinding and pulverization to obtain the composite particles described in this application.

It should be noted that polymerization of the polymer monomers may be performed using a polymerization method commonly used in the art, for example, polymerization may be performed in an emulsion polymerization or suspension polymerization manner.

In some embodiments, in step (1), additives, for example, an emulsifier such as sodium lauryl sulfate and a polymerization initiator such as ammonium persulfate, may also be added into a polymerization system of the polymer monomers.

In some embodiments, in step (1), the polymer monomers for preparing polyacrylate particles include at least the following polymer monomers:

first polymer monomer, having at least one ester bond, which is optionally one or more of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, or trimethylolpropane triacrylate, and more optionally one or more of methyl methacrylate, lauryl acrylate, lauryl methacrylate, or trimethylolpropane triacrylate;
second polymer monomer, having at least one cyanide bond, which is optionally one or more of acrylonitrile, methacrylonitrile, and ethacrylonitrile, and more optionally one or more of acrylonitrile and methacrylonitrile; and
third polymer monomer, having at least one amide bond, which is optionally one or more of acrylamide, N-methylol acrylamide, and N-butoxymethacrylamide, and more optionally one or more of acrylamide and N-methylolacrylamide.

In this way, the polyacrylate particles are polymerized using at least the foregoing three types of polymer monomers, so that the separator has suitable adhesion with an electrode plate, improving the kinetic performance of the battery.

In some embodiments, a weight ratio of the first polymer monomer, the second polymer monomer, and the third polymer monomer that are used for forming the polyacrylate particles is (45-70):(10-25):(10-35), for example, (50-70):(10-25):(10-35), (55-70):(10-25):(10-35), (60-70):(10-25):(10-35), (65-70):(10-25):(10-35), (45-70):(15-25):(10-35), (45-70):(20-25):(10-35), (45-70):(22-25):(10-35), (45-70):(10-25):(15-35), (45-70):(10-25):(20-35), (45-70):(10-25):(25-35), (45-70):(10-25):(30-35), or (45-70):(10-25):(32-35). In this way, when polyacrylate particles are formed by polymerization of polymer monomers in the foregoing ratio, glass transition temperature of the polyacrylate particles can satisfy the requirement of 20°C-80°C.

In some embodiments, in step (2), the inorganic particles include one or more of oxides of silicon, aluminum, calcium, zinc, and magnesium, and sodium sulfate, sodium benzoate, calcium carbonate, and modified materials thereof, optionally one or more of silicon dioxide, silica sol, aluminum oxide, zinc oxide, magnesium oxide, and sodium benzoate, and more optionally one or more of fumed silica, silicon micro-powder, aluminum oxide, and sodium benzoate.

In this application, "crosslinking degree a of composite particles" refers to crosslinking degree of polyacrylate particles in the composite particles, a test method of which may include the following steps:

(1) Two layers of weighing paper are stacked for weighing 6 g of composite particles (a weighing balance is a Uni Bloc SHIMADZU AUY220 balance with an accuracy of one ten-thousandth).
(2) The weighed composite particles are dried for 6 h in a vacuum oven at 105°C (Lijia LDZF-6090 vacuum oven with a size of 450 * 450 * 450 at RT-250°C).
(3) Two layers of medium-speed filter paper (NEWSTAR medium-speed filter paper) are stacked, numbered, and dried together for 6 h in the vacuum oven at 105°C (Lijia LDZF-6090 vacuum oven with a size of 450 * 450 * 450 at RT-250°C).
(4) The composite particles and the weighing paper are taken out of the vacuum oven and then immediately sealed using a sealing bag to prevent water absorption.
(5) The medium-speed filter paper is taken out of the vacuum oven and then immediately put into a self-sealing bag for weighing, a total weight of the medium-speed filter paper and the self-sealing bag is recorded as $m_1$, and 4 decimal places are retained for the weight value.
(6) The composite particles obtained in step (4) are poured into a small crusher (Baixin LG-01 crusher with power of 350 W, fineness of 30-300 meshes, a speed of2500 r/m, and a crushing capacity of 500 g/m), then a cover of the small crusher is closed and screwed tightly.
(7) A power supply is connected, a power switch is turned on, and then the power switch is turned off after time counted using a stopwatch reaches 30S.
(8) The crusher is left standing for 5 min, the cover of the crusher is unscrewed after powder settles in the crusher, and a sample obtained is uniform powder.
(9) The crushed sample is transferred to the self-sealing bag using a brush, and the self-sealing bag is sealed immediately.
(10) A centrifuge tube and a centrifuge tube lid with outer packages removed are placed on a balance, then a sample bag is taken out of a drying vessel, about 2 ± 0.2 g of sample is poured into the centrifuge tube and the centrifuge tube is immediately covered with the centrifuge tube lid, and an actual weight of the sample is weighed and recorded

as $m_2$.

(11) 50 mL dimethyl carbonate is added according to scales on a 50 mL centrifuge tube.

(12) The centrifuge tube is transferred to a drying oven at 60°C (Boxun GZX-9146MBE drying oven with a volume of 129 L at RT+5°C-300°C), and the centrifuge tube is maintained at the temperature for 12 h.

(13) The centrifuge tube is taken out of the drying oven, then the sample is poured onto the medium-speed filter paper, a solution is filtered, and residue after filtration is retained.

(14) The centrifuge tube is rinsed with a large amount of DMC solution to prevent the sample from remaining in the centrifuge tube.

(15) The residue after filtration is dried for 2 h in a drying oven at 105°C.

(16) After the sample is dried, the sample is put into a corresponding self-sealing bag for weighing.

(17) The balance is reset to zero for weighing a total mass of the residue after filtration, the medium-speed filter paper, and the self-sealing bag, and the mass is recorded as $m_3$.

Crosslinking degree a of composite particles is obtained through calculation according to a formula:

$$\text{Crosslinking degree} = \frac{1 - \frac{m2 - (m3 - m1)}{m2}}{2} \times 100\%.$$

In this application, "mass swelling degree b of composite particles" refers to mass swelling degree of polyacrylate particles in the composite particles, a test method of which may include the following steps:

(1) Dissolution: 10 g of composite particle powder and 90 g of N-methylpyrrolidone (NMP) are mixed, followed by stirring and dissolving for 7 h at 40°C.

(2) Preparation of glue film: A stirred composite particle powder slurry is added into a 250 mL beaker and then dried for 8 days at a temperature of 70°C to obtain a dried glue film.

(3) Swelling rate test: About 3 g of the dried glue film with a thickness of 2 mm is taken, an accurate mass of the glue film is weighed and recorded as $M_1$, then the glue film is soaked in an electrolyte (a mass ratio of ethylene carbonate (EC), ethyl methyl carbonate (EMC), and diethyl carbonate (DEC) in an electrolyte solvent is 3:5:2, and the electrolyte solvent and lithium hexafluorophosphate (LiPF$_6$ are prepared into a 1 mol/L electrolyte), the glue film is then dried in a drying oven at 70°C, a sample is taken out after drying is performed for 24 h, left standing for 1 h, and then wiped, a mass of the sample is weighed and recorded as $M_2$, and mass swelling degree b of composite particles is calculated according to a formula: Mass swelling degree $= \frac{M2 - M1}{M1} \times 100\%$.

Without wishing to be limited by any theory, the inventors have found through extensive research that in the prior art, an adhesive coating is generally applied on a separator substrate to reduce displacement between electrode plates and the separator. However, the existing adhesive coating has an excessive adhesive force, resulting in excessive adhesion between the separator and the electrode plates and degradation of kinetic performance of a battery. In addition, the excessive adhesive force of the adhesive coating leads to a large adhesive force between separators, which is not conducive to subsequent use of the separator. In addition, the adhesive coating has a low compressive modulus, so the adhesive coating is prone to collapse when a cell is compressed by an external force, which may block pores of the separator. In addition, the adhesive coating is prone to swelling in an electrolyte, resulting in excessive consumption of the electrolyte. The coating of the separator in this application includes composite particles and a binder, where the composite particles are bonded to the substrate via the binder, the composite particles include polyacrylate particles and inorganic particles, and the inorganic particle is present between at least two of the polyacrylate particles in the composite particles. On one hand, the composite particles include polyacrylate particles and inorganic particles, and the inorganic particle is present between at least two of the polyacrylate particles in the composite particles, the inorganic particles present in the composite particles avoid bonding between the polyacrylate particles caused by high-temperature treatment in the granulation process, use of the bound polyacrylate particles in the coating of the separator may cause ion transport to be hindered, thereby reducing the ionic conductivity of the separator. On the other hand, due to low compressive modulus of the polyacrylate particles, the polyacrylate particles being used alone in the coating of the separator are prone to block pores of the separator and even the surface of the anode under pressure, thereby reducing ion conduction and degrading the kinetic performance of the battery. With the inorganic particles provided between the polyacrylate particles, the compressive modulus of the polyacrylate particles can be improved to ensure that the kinetic performance of the separator and the anode is not affected by the composite particles, thereby improving the kinetic performance of the battery. In addition, the crosslinking degree a of the composite particles in this application and the mass swelling degree b thereof in the electrolyte satisfy a/b ≥ 1 and a ≥ 75%. Therefore, composite particles satisfying the crosslinking degree condition have an appropriate compressive modulus, which can reduce blockage of the surface of the anode caused by the bulges on the coating of the separator with volume swelling during cycling, prolonging the cycle life of a battery. In addition, the composite particles undergo no excessive swelling in the electrolyte, thus avoiding excessive consumption of the electrolyte and reducing the blockage of the pores of the separator caused by excessive volume swelling of the composite particles. In addition, the composite particles form bulges on the surface of the substrate or the coating, and the separator comes into contact with the electrode plate via the bulges. On one hand, the bulges provide appropriate space for stress release in the winding process, preventing the electrode plate from breaking and improving the safety performance. On the other hand, a gap is left between the separator and the electrode plate to facilitate flow and infiltration of the electrolyte, thereby improving the kinetic performance of the cell. Under joint action of the above conditions, an appropriate adhesive force is present between the separator and the electrode plate, thereby improving the kinetic performance of the battery. In addition, when high temperature is generated due to thermal runaway of the battery, the bulges formed by the composite particles on the surface of the coating can form a large-area glue film structure to reduce or block the ion transport channels and delay thermal spread of the battery, thereby effectively improving the cycling performance and high-temperature safety performance of the battery.

The inventors have found through in-depth research that when the separator of this application satisfies the foregoing conditions, the performance of the battery can be further improved and further if one or more of the following conditions are also satisfied optionally.

In some embodiments, the crosslinking degree a of the composite particles and the mass swelling degree b thereof in an electrolyte satisfy a/b being 1-2.1, for example, 1-2, 1-1.8, 1-1.6, 1-1.4, or 1-1.2. Therefore, composite particles satisfying the crosslinking degree condition have an appropriate compressive modulus, which can reduce blockage of the surface of the anode caused by the bulges on the coating of the separator with volume swelling during cycling, prolonging the cycle life of the battery. In addition, the composite particles undergo no excessive swelling in the electrolyte, thus avoiding excessive consumption of the electrolyte and reducing the blockage of the pores of the separator caused by excessive volume swelling of the composite particles. In some other embodiments, the crosslinking degree a of the composite particles and the mass swelling degree b thereof in the electrolyte satisfy a/b being 1-1.4.

In some embodiments, in the separator of this application, $D_v50$ of the composite particles is $\geq 2.5\ \mu m$, for example, 2.5 $\mu$m-10 $\mu$m, 2.5 $\mu$m-8 $\mu$m, 2.5 $\mu$m-6 $\mu$m, 2.5 $\mu$m-5 $\mu$m, 2.5 $\mu$m-4 $\mu$m, or 2.5 $\mu$m-3 $\mu$m. Therefore, the composite particles satisfying this $D_v50$ range can provide an appropriate adhesive force between the coating of the separator and electrode plates. In addition, this helps form a bulge structure on the surface of the coating, thereby improving the kinetic performance of the cell. In some other embodiments, in the separator of this application, $D_v50$ of the composite particles is 3 $\mu$m-8 $\mu$m.

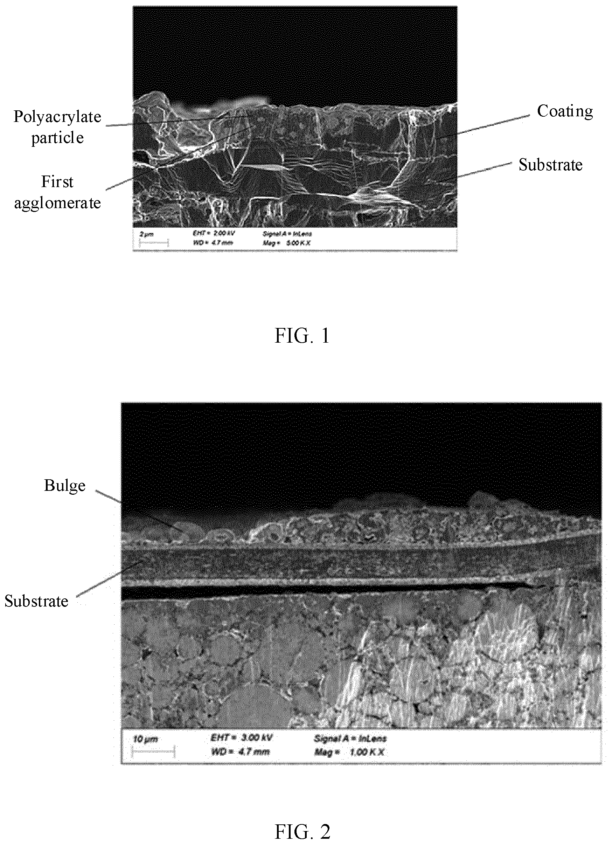

In some embodiments, in the separator of this application, referring to FIG. 1, a first agglomerate is present between the polyacrylate particles, and the first agglomerate includes at least two inorganic particles. Therefore, on one hand, the composite particles are not too soft, so as to ensure that suitable interaction between the composite particles and the electrode plate as well as between the composite particles and the substrate when the battery swells or experiences a large external force, thereby improving kinetic performance of the battery. On the other hand, it can be ensured that the composite particles may not be fused during the production process to block the ion transport channels, and when first agglomerates formed by the inorganic particles are present inside or on the surfaces of the composite particles, it is ensured that quasi-spherical bodies of the composite particles may not soften and collapse at a high temperature such as $\geq 45°C$ and at a stress state of $\geq 0.4$ MPa. This further ensures suitable interaction between the composite particles and the electrode plate as well as between the composite particles and the separator, thereby suppressing deterioration of the cycling performance of the battery and further improving the kinetic performance of the battery.

In some embodiments of this application, 0.01 $\mu$m $\leq D_v50$ of the first agglomerate $\leq D_v10$ of the composite particles. Thus, the compressive modulus of the separator can be increased.

In some embodiments, the composite particles in the separator of this application include inorganic particles of primary particle morphology. Further, $D_v50$ of the inorganic particles of the primary particle morphology is 0.01 $\mu$m-1 $\mu$m, for example, 0.01 $\mu$m-0.8 $\mu$m, 0.05 $\mu$m-1 $\mu$m, 0.1 $\mu$m-1 $\mu$m, 0.2 $\mu$m-1 $\mu$m, 0.3 $\mu$m-1 $\mu$m, 0.4 $\mu$m-1 $\mu$m, 0.5 $\mu$m-1 $\mu$m, 0.6 $\mu$m-1 $\mu$m, 0.7 $\mu$m-1 $\mu$m, 0.8 $\mu$m-1 $\mu$m, or 0.9 $\mu$m-1 $\mu$m. Therefore, the inorganic particles satisfying the $D_v50$ can allow the separator to obtain an appropriate compressive modulus, thereby improving the kinetic performance of the battery. In some other embodiments, $D_v50$ of the inorganic particles of the primary particle morphology is 0.5 $\mu$m-1 $\mu$m. Thus, the kinetic performance of the battery can be improved.

It should be noted that the primary particles and secondary particles have meanings known in the art. The primary particles are particles not in an agglomerated state. The secondary particles are particles in the agglomerated state, which are formed by two or more agglomerated primary particles.

In some embodiments, in the separator of this application, the composite particles include a second agglomerate, and the second agglomerate includes at least two of the polyacrylate particles. Therefore, the composite particles are not too soft, so as to ensure that suitable interaction between the composite particles and the electrode plate as well as between the composite particles and the substrate when the battery swells or experiences a large external force, thereby improving kinetic performance of the battery. Further, $D_v50$ of the second agglomerate is 0.3 $\mu$m-5 $\mu$m, for example,

0.5 µm-5 µm, 0.7 µm-4.5 µm, 1 µm-4 µm, 1.3 µm-3.5 µm, 1.5 µm-3.2 µm, 1.7 µm-3 µm, 2 µm-2.8 µm, 2 µm-2.5 µm, 5 µm-10 µm, 5 µm-9 µm, 5 µm-8 µm, 5 µm-7 µm, or 5 µm-6 µm. In some other embodiments, $D_v50$ of the second agglomerate is 1 µm-2 µm.

In some embodiments, in the composite particles of this application, the polyacrylate particles include polyacrylate particles of primary particle morphology and/or polyacrylate particles of secondary particle morphology. $D_v50$ of the polyacrylate particles of the primary particle morphology is 50 nm-400 nm, for example, 50 nm-375 nm, 75 nm-375 nm, 100 nm-350 nm, 125 nm-325 nm, 150 nm-300 nm, 175 nm-275 nm, 200 nm-250 nm, or 200 nm-225 nm. In some other embodiments, $D_v50$ of the polyacrylate particles of the primary particle morphology is 100 nm-200 nm. $D_v50$ of the polyacrylate particles of the secondary particle morphology is 2 µm-15 µm, for example, 3 µm-15 µm, 4 µm-12 µm, 5 µm-10 µm, 5 µm-8 µm, 5 µm-7 µm, or 5 µm-6 µm.

In some embodiments, percentage of the inorganic particles in the composite particles is 1wt%-50wt%, for example, 1wt%-48wt%, 1wt%-45wt%, 1wt%-40wt%, 1wt%-35wt%, 1wt%-30wt%, 1wt%-25wt%, 1wt%-20wt%, 1wt%-15wt%, 2wt%-15wt%, 3wt%-15wt%, 4wt%-15wt%, 5wt%-15wt%, 7wt%-15wt%, 10wt%-15wt%, or 12wt%-15wt%. In this way, the percentage of the inorganic particles in the composite particles is controlled within the foregoing percentage range, avoiding bonding between the polyacrylate particles due to high-temperature treatment in the granulation process, thereby improving ionic conductivity of the separator. In addition, the separator has an appropriate compressive modulus, ensuring that an appropriate action force is present between the coating of the separator and the anode of the battery module in a stressed state.

In some embodiments, in the separator of this application, the polyacrylate particles in the composite particles have a glass transition temperature of 20°C-80°C, for example, 25°C-75°C, 30°C-70°C, 35°C-65°C, 40°C-60°C, 45°C-55°C, or 50°C-55°C. When the glass transition temperature of the polyacrylate particles satisfies the foregoing temperature, the polyacrylate particles are tolerable to swelling in the electrolyte, so that excessive consumption of the electrolyte is avoided, residual monomers cannot swell in the electrolyte to block the separator and affect the kinetic performance of the cell. In addition, it is not likely to result in significant degradation of adhesion between the separator and the electrode plate, and the electrode plate is not prone to affect the safety performance of the battery due to damage caused by pressure of the composite particle. In some other embodiments, the polyacrylate particles in the composite particles have a glass transition temperature of 25°C-65°C.

In some examples, a method for testing the glass transition temperature of the polyacrylate particles can perform testing through a method commonly used in the art, for example, can perform testing through a differential scanning calorimetry method with reference to GB/T19466.2, with a temperature rise rate of 10°C/min in an air atmosphere.

In some embodiments, the composite particles have an area coverage of 10%-25% on the coating, for example, 12%-25%, 15%-25%, 17%-25%, 19%-25%, 20%-25%, or 22%-25%. The inventors have found that if the area coverage of the composite particles on the coating is excessively low (below 10%), the coating adhesion is seriously reduced and a bare cell becomes a soft cell, so that the requirements of shaping and putting the cell into the housing cannot be met; and that if the area coverage of composite particles on the coating is too high (above 25%), the cell adhesion is too large, which seriously affects the efficiency of electrolyte injection. In addition, the possibility of film formation of bonding substances during cycling of the cell increases, which blocks the pores of the separator and deteriorates the kinetic performance. In some other embodiments, the composite particles have an area coverage of 15%-20% on the coating.

In some examples, the area coverage of the composite particles on the coating can be tested with coverage test equipment from Guangdong Kitai Intelligent Equipment Co., Ltd.

In some embodiments, referring to FIG. 2, bulges are formed on the surface of the separator in this application, where two-side height of the bulges is 15 µm-60 µm, for example, 15 µm-58 µm, 16 µm-56 µm, 18 µm-55 µm, 20 µm-52 µm, 22 µm-40 µm, 25 µm-40 µm, 25 µm-38 µm, 25 µm-36 µm, 28 µm-35 µm, or 30 µm-32 µm. Therefore, on one hand, the bulges within the height range can provide appropriate space for stress release, preventing the electrode plate from breaking in the winding process and improving the safety performance. On the other hand, an appropriate gap is left between the separator and the electrode plate to facilitate flow and infiltration of the electrolyte, thereby improving the kinetic performance of the cell. Further, the first agglomerate is present on surface of the bulge. In this way, the bulges can provide suitable adhesion between the separator and the electrode plate, so that the kinetic performance of the battery can be improved.

Specifically, coatings are formed on two opposite surfaces of the substrate, and the sum of the heights of the bulges on the coatings of the two sides is the two-side height of the bulges, and the testing method for the two-side height of the bulges includes: referring to FIG. 1, first stacking the negative electrode plate, the separator, and the positive electrode plate in sequence to form a cell and then winding the cell into a roll (the outermost layer of the cell ends with a convex surface of the positive electrode plate), and using a CT device (ZEISS-1500) to scan a position 15 ± 1 mm below an edge of the negative electrode plate at a corner of the wound cell; taking samples along the horizontal and oblique angle (30-45°) from the obtained CT image, and drawing a line along a direction with the largest gap; for the innermost 5 layers, sampling from a convex surface of the innermost positive electrode plate to a convex surface of the 5th layer positive electrode plate, and taking an average value of 4 layers; and for layers 6 and afterwards, sampling from the convex surface of the innermost positive electrode plate to a convex surface of the outermost positive electrode plate, and taking a value for every 5 layers.

Gap average of the innermost 5 layers = [CT measurement distance - 4 * thickness of the negative electrode plate after cold pressing * (1 + rebound rate of the negative electrode plate) - 4 * thickness of the positive electrode plate after cold pressing (1 + rebound rate of the positive electrode plate) - 8 * thickness of the separator] / 8.

Gap average of layers 6-10 and afterwards = [CT measurement distance - 5 * thickness of the negative electrode plate after cold pressing * (1 + rebound rate of the negative electrode plate) - 5 * thickness of the positive electrode plate after cold pressing (1 + rebound rate of the positive electrode plate) - 10 * thickness of the separator] / 10.

Rebound rate of the negative electrode plate = (thickness of the negative electrode plate before being put into the housing body - thickness of the negative electrode plate after cold pressing)/thickness of the negative electrode plate after cold pressing.

Rebound rate of the positive electrode plate = (thickness of the positive electrode plate before being put into the housing body - thickness of the positive electrode plate after cold pressing)/thickness of the positive electrode plate after cold pressing.

Two-side height of the bulges of the separator = (gap average of the innermost 5 layers + gap average of layers 6-10 and afterwards)/2.

In some embodiments, the binder includes a binder polymer and a plasticizer. The binder polymer and the plasticizer jointly act to allow the binder to have good pressure sensitivity and further allow the separator to have good pressure sensitivity so that the adhesive force of the separator is less than 0.1 N/m under the action of a pressure $\leq$ 1 MPa, thus avoiding adhesion between layers during winding and storage of the separator, and the separator can have significant adhesion to the electrode plate under the action of a pressure $\geq$ 2 MPa. Therefore, when the separator is used to prepare a cell, the electrode plate and the separator can closely fit under normal temperature and appropriate pressure. This prevents displacement between the electrode plate and the separator, which can avoid cell scrapping, compromised cell performance, and safety risks. In addition, a tunnel furnace and a second lamination process in the conventional cell production process can be omitted, thus saving the production space and production time, reducing energy consumption, significantly increasing the production capacity of the cell. Furthermore, the shaping performance, safety performance and kinetic performance of the cell can be improved, thus improving the safety performance and kinetic performance of a secondary battery including the cell and an electric apparatus including such secondary battery.

In some embodiments, a mass ratio of the binder polymer to the plasticizer in the binder may be (4-19): 1, for example, (4-18): 1, (4-15): 1, (4-12):1, (4-11):1, (4-10): 1, (4-8):1, or (4-6): 1. With the relative ratio of the binder polymer to the second plasticizer within the above range, it can be ensured that the electrode plates and the separator obtain a large adhesive force under certain pressure, without increasing the resistance of the separator or decreasing the cycling performance of the battery.

The percentage of the plasticizer may be tested with the STA449F3 thermogravimetric analyzer from Shimadzu Corporation of Japan. In a specific example, a test method is as follows: 10 mg of the binder is taken, and an initial mass is denoted as M0. The binder is heated up to 200°C, and a mass at this point is denoted as M1. The percentage of the plasticizer is denoted as M0 - M1, and the percentage of the binder polymer is denoted as M0 - (M0 - M1). Test conditions are set as follows: a temperature range is -100°C to 400°C, a nitrogen atmosphere is used, and a temperature rise rate is 10°C/min.

In some embodiments of this application, the binder may be a core-shell structure, and both core and shell of the core-shell structure include a binder polymer and a plasticizer, where in the core structure, a mass ratio of the binder polymer to the plasticizer is (2-5):1, for example, (3-4):1; and in the shell structure, a mass ratio of the binder polymer to the plasticizer is (6-10): 1, for example, (7-9): 1 or (7-8): 1. Both core and shell of the core-shell structure include the binder polymer and the plasticizer. This can further improve the pressure sensitivity of a pressure binder and further enhance the kinetic performance of the cell. In addition, the binder includes the plasticizer. Under the action of a specified pressure (for example, 1 MPa-2 MPa), the plasticizer can quickly migrate between the binder polymer and a main material of the separator to plasticize the binder polymer and stretch its molecular chains to perform intermolecular hydrogen bonding with, for example, an SBR-type binder in the negative electrode plate, a thickening agent CMC, and a binder such as PVDF in the positive electrode plate, thus improving interfacial wetting and enhancing riveting between two interfaces. The core structure is crushed under a pressure $\geq$ 2 MPa and the plasticizer in the core is released, so that the above effect can be further improved.

In some embodiments, part of the plasticizer is grafted on the binder polymer. For example, based on weight of the plasticizer, at least 5wt% of the plasticizer is grafted on the binder polymer. When part of the plasticizer is grafted on the binder polymer, it can prevent most of the plasticizer from migrating into the electrolyte during cycling, thereby preventing consuming multiple functional additives of the electrolyte, increasing a resistance value of the separator, and affecting the kinetic performance of the cell. When at least 5wt% of the plasticizer is grafted on a main chain of the binder polymer, the separator and the electrode plate can form an "adhesion" effect, which can improve the durability of the adhesion at normal temperature and reduce bounce, further ensuring that no excessive plasticizer migrates to the electrolyte during cycling and affects the performance of the cell.

The grafting rate of the plasticizer on the binder polymer can be detected with an infrared test method. To be specific, the binder polymer, the plasticizer, and the binder are tested separately to obtain their respective Fourier infrared spectra, and a peak different from that of the binder polymer and the plasticizer alone is present at a position of at 1500 $cm^{-1}$-1700 $cm^{-1}$ of the binder. The peak indicates the grafted plasticizer and the area under the peak indicates the amount of grafted plasticizer, from which the grafting rate of the plasticizer can be calculated.

In some embodiments, a median particle size of the binder polymer may be 0.5 $\mu$m-3.0 $\mu$m, for example, 0.8 $\mu$m-2.8 $\mu$m, 1 $\mu$m-2.5 $\mu$m, 1.2 $\mu$m-2.3 $\mu$m, 1.5 $\mu$m-2 $\mu$m, or 1.8 $\mu$m-2 $\mu$m. The binder polymer satisfying the median particle size in this application facilitates its uniform distribution on the composite particles and its bonding with an electrode plate under a specified pressure. In some embodiments, the median particle size of the binder polymer may be 0.8 $\mu$m-2 $\mu$m.

The median particle size of the binder polymer may be determined using a laser particle size analyzer (for example, Malvern Master Size 3000) with reference to the standard GB/T 19077.1-2016.

In some embodiments, a DSC melting point of the binder may be -50°C to 100°C, for example, -45°C to 95°C, -40°C to 90°C, -35°C to 85°C, -30°C to 80°C, - 25°C to 75°C, -20°C to 70°C, -15°C to 65°C, -10°C to 60°C, -5°C to 55°C, 0°C to 50°C, 5°C to 45°C, 10°C to 40°C, 15°C to 35°C, 20°C to 30°C, or 25°C to 30°C. Thus, the binder with the DSC melting point can ensure the adhesive force at normal temperature, avoiding excessive adhesive force causing bonding of the separator during roll winding under 1 MPa, and avoiding small adhesive force causing weak bonding between the separator and the electrode plates at normal temperature under 2 MPa, which is not conducive to the shaping of the cell.

According to some examples, the DSC melting point has a meaning well known in the art and can be determined with instruments and methods well known in the art, for example, a DSC melting point tester of instrument model DSC 200F3 of NETZSC, Germany. In a specific example, a test method is as follows: About 10 mg of sample is taken for testing. Test conditions are set as follows: a temperature range is - 100°C to 400°C, a nitrogen atmosphere is used, and a temperature rise rate is 10°C/min. A temperature corresponding to an absorption peak at the first temperature rise is selected as a corresponding DSC melting point.

In some embodiments, the binder polymer includes a copolymer formed by at least one of the following first monomers, at least one of the following second monomers, at least one of the following third monomers, and at least one of the following reactive monomers of reactive dispersants as follows:

first monomers, having a melting point typically higher than 80°C, including acrylic acid, methacrylic acid, methyl methacrylate, tert-butyl methacrylate, isobornyl methacrylate, methylol acrylamide, acrylamide, styrene, and acrylonitrile;

second monomers, having a melting point typically higher than 80°C, including C4-C22 alkyl acrylate, isobutyl acrylate, isooctyl acrylate, tert-butyl acrylate, 2-ethylhexyl acrylate (isooctyl), cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate 2-hydroxypropyl acrylate, ethyl ethylideneurea methacrylate, dicyclopentene ethoxy methacrylate, tetrahydrofuryl methacrylate, trifluoroethyl methacrylate, dimethylaminoethyl methacrylate, diethylaminoethyl methacrylate, ethyl ethylideneurea methacrylate, acryl methacrylate, dicyclopentene ethoxy methacrylate, tetrahydrofuryl methacrylate, and trifluoroethyl methacrylate;

third monomers, including 2-hydroxyethyl acrylate, 2-hydroxypropyl acrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, 3-methacryloxypropyltrimethoxysilane, N-methylolacrylamide, N-butoxymethyl(meth)acrylamide, diacetoneacrylamide, ethyl methacrylate acetoacetate, divinylbenzene, epoxy resin with an epoxy value of 0.35-0.50, and divinylbenzene; and

reactive dispersants, including polyvinyl alcohol, polypropyl alcohol, polypropylene glycol, polyethylene glycol, and polyvinyl acid alcohol. Optionally, these reactive dispersants have a degree of alcoholysis ≥ 85% and an average degree of polymerization of 400-2000 and preferably have an alcoholysis degree ≥ 88% and an average degree of polymerization of 500-1600.

Therefore, the binder polymer with the composition has suitable swelling, pressure sensitivity, and adhesion properties, as well as a suitable elastic modulus, allowing the cell to have excellent shaping effect, kinetic performance, and safety performance.

It should be noted that, in this application, the term "degree of alcoholysis" refers to a percentage of hydroxyl groups in the original groups in the product obtained through alcoholysis in molar fraction %. For example, there are 100 original groups (ester groups) and 60 hydroxyl groups after alcoholysis; in this case, the degree of alcoholysis is 60%.

It should be noted that, in this application, the term "average degree of polymerization" refers to a statistical average of degrees of polymerization for a polymer that includes molecules of the same series of polymers with difference degrees of polymerization. There are two commonly used methods to express the average degree of polymerization: the degree of polymerization obtained by averaging the number of molecules, which is referred to as a number-average degree of polymerization; and the degree of polymerization obtained by averaging the weight, called a weight-average degree of polymerization. The "average degree of polymerization" described in this application is a number-average degree of polymerization.

In some embodiments, the plasticizer may include at least one of glycerol C4-C10 alkyl diether or monoether, glycerol C4-C10 carboxylic acid monoester or diester, propylene glycol C4-C10 alkyl monoether, and glycerol.

In some embodiments, the binder may be synthesized in the following synthesis method including the following steps:

In the first step, an emulsifier (for example, allyl sulfonate) of 0. 1wt%-1wt% (which is relative to the total weight of a reactive monomer mixture (including the first monomer, the second monomer, the third monomer and the reactive dispersant), additives (including emulsifiers, stabilizers, aqueous initiators) and the plasticizer added during the synthesis of the binder, similarly hereinafter) and 2wt%-3wt% oligomer (for example, octadecyl methacrylate) with a number average molecular weight ≤ 1000 and a melting point at 0°C-30°C are added sequentially into a solvent (for example, deionized water), followed by dispersing via a homogenizer at a rotation speed controlled to be 8000 r/min-12000 r/min, such as 10000 r/min, with a dispersion time of 20 min-60 min, such as 50 min and a dispersion reaction temperature of 20°C-40°C, such as 25°C, to obtain a first mixed solution.

In the second step, 1wt%-4wt% stabilizer, for example, including at least one of polyethylene oxide, allyl polyether sulfate, methylene succinic acid (itaconic acid), styrenesulfonic acid, sodium vinyl sulfonate, and sodium nanocellulose, is added into the first mixed solution, followed by mixing via the homogenizer at a rotation speed controlled to be 6000 r/min-8000 r/min, such as 6500 r/min, with a mixing time of 20 min-60 min, such as 30 min and a mixing reaction temperature of 20°C-60°C, such as 45°C, to obtain a second mixed solution.

In the third step, 0.05wt%-0.5wt% aqueous initiator, for example, including at least one of sodium bicarbonate, benzoyl peroxide, lauryl peroxide, isopropylbenzene hydrogen peroxide, tert-butyl hydrogen peroxide, di-tert-butyl peroxide, di-isopropyl benzene peroxide, tert-butyl benzoate peroxide, tert-butyl tert-valerate peroxide, methyl ethyl ketone peroxide, cyclohexanone peroxide di-isopropyl peroxydicarbonate, dicyclohexyl peroxydicarbonate, potassium persulfate, sodium persulfate, ammonium persulfate, azobisisobutyronitrile, and azobisisoheptanonitrile. Then, mixing is performed using the homogenizer at a rotation speed controlled to be 8000 r/min-12000 r/min, such as 8000 r/min, with a mixing time of 20 min-60 min, such as 30 min. A reaction temperature is 60°C-80°C, for example, 72°C. A third mixed solution is obtained.

In the fourth step, 35wt%-45wt% reactive monomer mixture is added dropwise into the third mixed solution gradually at a uniform speed (the reaction monomer mixture is controlled to be added dropwise completely just in 60 min) under the condition that the rotation speed of the homogenizer is 100 r/min-1000 r/min, such as 400 r/min, with a reaction time of 80 min-100 min, such as 80 min, to obtain a fourth mixture.

In the fifth step, the fourth mixture continues to react under the condition that a reaction temperature is 80°C-90°C, such as 84°C and the rotation speed of the homogenizer is 12000 r/min-18000 r/min, such as 15000 r/min, with a reaction time of 120 min-240 min, such as 180 min, to obtain a fifth mixture.

In the sixth step, 10wt%-20wt% plasticizer, such as glycerol, is added into the fifth mixture for reacting, where a reaction temperature is controlled to be 80°C-90°C, such as 84°C, the rotation speed of the homogenizer is controlled to be 12000 r/min-18000 r/min, such as 15000 r/min, and a reaction time is 120 min-240 min, such as 180 min; and a sixth mixture is obtained.

In the seventh step, 0.05wt%-0.5wt% aqueous initiator, such as ammonium persulfate-sodium bicarbonate, is added into the sixth mixture. The rotation speed of the homogenizer is controlled to be 8000 r/min-12000 r/min, such as 8000 r/min. The time is 20 min-60 min, such as 30 min. A reaction temperature is 60°C-80°C, for example, 72°C. A seventh mixed is obtained.

In the eighth step, 30wt%-40wt% reactive monomer mixture is added dropwise into the seventh mixture gradually at a uniform speed (the reaction monomer mixture is controlled to be added dropwise completely just in 60 min) under the condition that the rotation speed of the homogenizer is 100 r/min-1000 r/min, such as 400 r/min, with a reaction time of 100 min-160 min, such as 120 min, to obtain an eighth mixture.

In the ninth step, 5wt%-20wt% plasticizer, such as glycerol, is added into the eighth mixture for reacting, where a reaction temperature is controlled to be 80°C-90°C, such as 84°C, the rotation speed of the homogenizer is 12000 r/min-18000 r/min, such as 15000 r/min, and a reaction time is 120 min-240 min, such as 180 min; and a ninth mixture is obtained.

In the tenth step, the ninth mixture is cooled down to below 50°C and filtered to obtain the binder of the core-shell structure. Persons skilled in the art can also obtain a binder of a non-core-shell structure by performing synthesis with reference to the above method (omitting the steps including the seventh step to the ninth step and correspondingly changing the mass fraction of the plasticizer and the reactive monomer mixture).

In some embodiments, in the separator of this application, a mass ratio of the composite particles to a solid content in the binder is (80-90):(5-20), for example, (80-90):(6-20), (80-90):(7-18), (80-90):(8-15), (80-90):(9-11), (80-90):10, (81-89):(5-20), (82-88):(5-20), (83-87):(5-20), (84-86):(5-20), or 85:(5-20). The inventors have found that mixing the composite particles with the binder in the coating in this ratio can improve both safety performance and energy density of the battery and provide suitable adhesion between the separator and the electrode plate, thereby improving kinetic performance of the battery. In some other embodiments, in the separator of this application, a mass ratio of the composite particles to the binder is (85-90):(8-15).

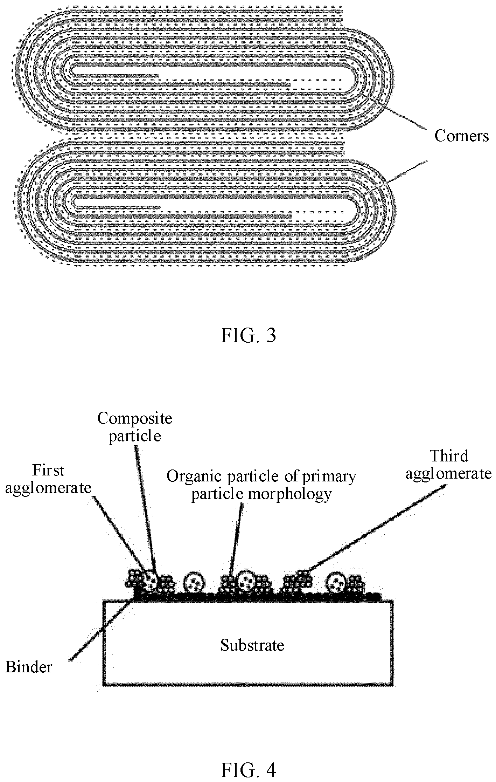

In some embodiments, referring to FIG. 4, the coating of the separator in this application further includes organic particles, that is, the coating of the separator includes composite particles, a binder, and organic particles, where the organic particles include at least one of polytetrafluoroethylene particles, polytrifluoroethylene particles, polyvinyl fluoride particles, polyvinylidene fluoride particles, polyethylene particles, polypropylene particles, polyacrylonitrile particles, polyethylene oxide particles, copolymer particles of fluorine-containing alkenyl monomer units and vinyl monomer units, copolymer particles of fluorine-containing alkenyl monomer units and acrylic monomer units, copolymer particles of fluorine-containing alkenyl monomer units and acrylate monomer units, and modified compound particles of the homopolymers or copolymers; and the organic particles and the composite particles form bulges on the surface of the coating. Thus, the cycling performance and safety performance of the battery can be improved.

In some embodiments, referring to FIG. 4, the organic particles of the coating of the separator in this application form a third agglomerate. Further, $D_v50$ of the third agglomerates is 5 $\mu$m-30 $\mu$m, for example, 5 $\mu$m-28 $\mu$m, 5 $\mu$m-25 $\mu$m, 5 $\mu$m-22 $\mu$m, 5 $\mu$m-20 $\mu$m, 5 $\mu$m-20 $\mu$m, 5 $\mu$m-18 $\mu$m, 5 $\mu$m-15 $\mu$m, 5 $\mu$m-12 $\mu$m, 5 $\mu$m-10 $\mu$m, 5 $\mu$m-8 $\mu$m, or 5 $\mu$m-6 $\mu$m.

In some embodiments, referring to FIG. 4, the third agglomerate includes organic particles of primary particle morphology, and a gap is present between adjacent two of the organic particles. The gap may serve as an ion transport channel, thereby improving the ionic conductivity of the separator. In some embodiments, $D_v50$ of the organic particles of the primary particle morphology is 50 nm-400 nm, for example, 50 nm-375 nm, 75 nm-375 nm, 100 nm-350 nm, 125 nm-325 nm, 150 nm-300 nm, 175 nm-275 nm, 200 nm-250 nm, or 200 nm-225 nm. In some other embodiments, $D_v50$ of the organic particles of the primary particle morphology is 100 nm-200 nm.

$D_v50$ refers to a particle size at which a cumulative volume distribution percentage reaches 50%. $D_v10$ refers to a particle size at which a cumulative volume distribution percentage reaches 10%. In this application, both $D_v10$ and $D_v50$ of the composite particles can be determined with a laser diffraction particle size analysis method. For example, they are determined using a laser particle size analyzer (for example, Malvern Master Size 3000) with reference to the standard GB/T 19077-2016. $D_v50$ of the inorganic particles of the primary particle morphology, $D_v50$ of the polyacrylate particles of the primary particle morphology, and $D_v50$ of the polyacrylate particles of the secondary particle morphology can be obtained through statistics collection based on an SEM image of the separator. For example, an SEM image of the separator at a magnification of 10Kx is obtained, 5 parallel samples are used for each sample, 10 positions are used for each parallel sample, 20 points are selected for statistics collection at each position; and finally an average value is obtained and used as a corresponding particle size. $D_v50$ of the first agglomerate, $D_v50$ of the second agglomerate, and $D_v50$ of the third agglomerate can be obtained through statistics collection based on a CP diagram of the separator. For example, a CP diagram of the separator at a magnification of 5Kx is obtained, 5 parallel samples are used for each sample, 10 positions are used for each parallel sample, and 20 points are selected for statistics collection at each position; and finally, an average value is obtained and used as a corresponding particle size.

In some embodiments, a mass ratio of the composite particles to the organic particles is (20-90):(0-70). For example, the mass ratio of the composite particle to the organic particle is (20-90):(5-65), (20-90):(10-60), (20-90):(20-50), (20-90):(30-40), (30-80):(0-70), (40-70):(0-70), (50-60):(0-70), (30-80):(5-65), (40-65):(10-55), (45-60):(20-45), or (55-60):(30-45). Thus, infiltration and distribution uniformity of the electrolyte can be improved, the high-temperature storage performance of the battery can be improved, and the safety performance and cycling performance of the battery can be improved. In some other embodiments, a mass ratio of the composite particles to the organic particles is (45-90):(0-45). Thus, the safety performance and cycling performance of the battery can be improved.

In some embodiments, the coating may further include other organic compounds, for example, a polymer for improving heat resistance, a dispersant, a wetting agent, a binder of another type, and the like. The foregoing other organic compounds are all non-granular substances in the coating. This application imposes no particular limitation on types of the foregoing other organic compounds, which may be any well-known material with good improvement performance.

In some embodiments, coating weight per unit area on a single surface of the separator is 0.2 g/m$^2$-2 g/m$^2$, for example, 0.5 g/m$^2$-1.8 g/m$^2$, 0.7 g/m$^2$-1.5 g/m$^2$, 1 g/m$^2$-1.5 g/m$^2$, or 1 g/m$^2$-1.2 g/m$^2$.

In this application, the substrate is made of a porous film material with good chemical stability and mechanical stability. In some embodiments, the substrate may be made of a single-layer film material or a multi-layer composite film material. When the substrate is made of a multi-layer composite film material, all layers may be made of same or different materials.

In some embodiments, in the separator of this application, the substrate may be a porous film or a porous non-woven mesh including one or more of the following: polyethylene, polypropylene, polyethylene terephthalate, polybutylene terephthalate, polyester, polyacetal, polyamide, polycarbonate, polyimide, polyetheretherketone, polyaryl etherketone, polyetherimide, polyamideimide, polybenzimidazole, polyethersulfone, polyphenylene ether, cycloolefin copolymer, polyphenylene sulfide, and polyethylene naphthalene. In some other embodiments, the substrate is a porous film or a porous non-woven mesh including polyethylene and/or polypropylene. Selection of the foregoing substrate for preparing the separator helps the substrate be bonded to the coating via the binder, to form a moderately dense and porous separator capable of conducting lithium ions.

In some embodiments, in the separator of this application, the substrate has a porosity of 10%-95%, for example, 15%-90%, 20%-85%, 25%-80%, 30%-75%, 35%-70%, 40%-65%, 45%-60%, or 50%-55%. In some other embodiments, the substrate of the separator in this application has a porosity of 35%-45%. Thus, the ionic conductivity of the separator can be improved, and the probability of contact between the positive electrode plate and the negative electrode plate can be reduced. In some embodiments, in the separator of this application, the substrate has a pore diameter of 0.1 $\mu$m-50 $\mu$m, for example, 0.5 $\mu$m-50 $\mu$m, 1 $\mu$m-45 $\mu$m, 5 $\mu$m-40 $\mu$m, 10 $\mu$m-35 $\mu$m, 15 $\mu$m-30 $\mu$m, or 20 $\mu$m-25 $\mu$m. In some other embodiments, in the separator of this application, the substrate has a pore diameter of 0.1 $\mu$m-5 $\mu$m. Selection of the substrate with the foregoing pore structure allows the separator to have good ionic conductivity, reducing the probability that the positive electrode plate and the negative electrode plate are in direct contact with each other, thereby improving the kinetic performance and the safety performance of the cell.

In some embodiments, a thickness of the substrate is $\leq$ 10 $\mu$m; for example, the thickness of the substrate may be 5 $\mu$m-10 $\mu$m, 5 $\mu$m-9 $\mu$m, or 7 $\mu$m-10 $\mu$m. When the thickness of the substrate is controlled within the given range, the energy density of the battery can be further increased with the cycling performance and safety performance of the battery ensured.

According to some examples, substance types of the polyacrylate particles, the organic particles, and the binder may be tested using a device and method known in the art. For example, infrared spectrum of a material can be tested to determine characteristic peaks that the material contains, so as to determine a substance category. Specifically, an infrared spectrum analysis may be performed on the organic particles using an instrument and method well-known in the art, such as an infrared spectrometer. For example, an IS 10 Fourier transform infrared spectrometer from Nicolet (nicolet) of the United States is used for the test with reference to GB/T6040-2002 general rules for infrared analysis.

A second aspect of this application further provides a method for preparing separator, including the following steps:

(1) A substrate is provided.
(2) A coating including composite particles and a binder is formed on at least a portion of surface of the substrate, where the composite particles form bulges on surface of the coating, and the composite particles include polyacrylate particles and inorganic particles, where the inorganic particle is present between at least two of the polyacrylate particles, and crosslinking degree a of the composite particles and mass swelling degree b thereof in an electrolyte satisfy a/b $\geq$ 1 and a $\geq$ 75%.

Specifically, the substrate, the composite particle, and the binder are the same as that described above. Details are not described herein again.

In some embodiments, the separator includes a substrate and a coating, where the coating is provided on only one surface of the substrate.

In some embodiments, the separator includes a substrate and a coating, where the coating is provided on both surfaces of the substrate.

In some embodiments, step (2) can be performed using the following steps: Step (2-1): A coating slurry is provided, where the coating slurry includes composite particles and a binder. Step (2-2): The coating slurry is applied on at least one side of the substrate, followed by drying to obtain the separator.

In some embodiments, in step (2-1), the solvent in the coating slurry may be water, such as deionized water.

In some embodiments, in step (2-1), the coating slurry may further include other organic compounds, for example, may further include a polymer that improves heat resistance, a dispersant, a wetting agent, or an emulsive binder. The other organic compounds are all non-granular in the dried coating.

In some embodiments, in step (2-1), the coating slurry further includes organic particles, where the organic particles and the composite particles jointly form the bulges on the surface of the coating. The organic particles include at least one of polytetrafluoroethylene particles, polytrifluoroethylene particles, polyvinyl fluoride particles, polyvinylidene fluoride particles, polyethylene particles, polypropylene particles, polyacrylonitrile particles, polyethylene oxide particles, copolymer particles of fluorine-containing alkenyl monomer units and vinyl monomer units, copolymer particles of fluorine-containing alkenyl monomer units and acrylic monomer units, copolymer particles of fluorine-containing alkenyl monomer units and acrylate monomer units, and modified compound particles of the homopolymers or copolymers.

In some embodiments, in step (2-2), the coating application is performed using a coater.

In the embodiments of this application, the coater is not particularly limited in type and may be a commercially available coater.

In some embodiments, in step (2-2), the coating application may use processes such as transfer coating, rotary spraying, and dip coating. For example, the coating application uses the transfer coating.

In some embodiments, the coater includes a gravure roller, and the gravure roller is used for transferring the coating slurry to the substrate.

Controlling the foregoing process parameters within the given ranges can further improve use performance of the separator in this application. Those skilled in the art can selectively adjust one or more of the foregoing process parameters according to actual production.

The foregoing substrate, the composite particles, and the organic particles are all commercially available.

A third aspect of this application provides a battery including the separator according to the first aspect or the separator prepared in the second aspect.

The battery refers to a battery that can be charged after being discharged to activate active materials for continuous use.

Typically, the battery includes a positive electrode plate, a negative electrode plate, a separator, and an electrolyte. In a charge and discharge process of the battery, active ions migrate back and forth between the positive and negative electrode plates for intercalation and deintercalation. The separator is disposed between the positive electrode plate and the negative electrode plate for separation. The electrolyte conducts ions between the positive electrode plate and the negative electrode plate.

[Positive electrode plate]

In a battery, the positive electrode plate typically includes a positive electrode current collector and a positive electrode film layer provided on the positive electrode current collector, where the positive electrode film layer includes a positive electrode active material.

The positive electrode current collector may be a conventional metal foil or a composite current collector (a metal material may be provided on a polymer matrix to form a composite current collector). For example, the positive electrode current collector may be an aluminum foil.

The positive electrode active material is not limited to any specific type, may use materials that are known in the art and can be used for positive electrodes of batteries, and may be selected by persons skilled in the art based on actual demands.

For example, the positive electrode active material may include but is not limited to one or more of lithium transition metal oxide, olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and modified compounds thereof. These materials are all commercially available.

The modified compounds of the foregoing materials may be obtained through doping modification and/or surface coating modification to the materials.

The positive electrode film layer typically may optionally include a binder, a conductive agent, or other optional additives.

For example, the conductive agent may include one or more of superconducting carbon, acetylene black, carbon black, Ketjen black, carbon dots, carbon nanotube, Super P (SP), graphene, and carbon nanofibers.

For example, the binder may include one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Negative electrode plate]

In a battery, the negative electrode plate typically includes a negative electrode current collector and a negative electrode film layer provided on the negative electrode current collector, where the negative electrode film layer includes a negative electrode active material.

The negative electrode current collector may be a conventional metal foil or a composite current collector (for example, a metal material may be provided on a polymer matrix to form a composite current collector). For example, the positive electrode current collector may be a copper foil.

The negative electrode active material is not limited to any specific type, may use materials that are known in the art and can be used for negative electrodes of batteries, and may be selected by persons skilled in the art based on actual demands. For example, the negative electrode active material may include but is not limited to one or more of artificial graphite, natural graphite, hard carbon, soft carbon, a silicon-based material, and a tin-based material. The silicon-based material may include one or more of elemental silicon, a silicon-oxygen compound (such as silicon monoxide), silicon-carbon composite, silicon-nitrogen composite, and silicon alloy. The tin-based material may include one or more of elemental tin, a tin-oxygen compound, and tin alloy. These materials are all commercially available.

In some embodiments, to further improve the energy density of the battery, the negative electrode active material may include a silicon-based material.

The negative electrode film layer typically may optionally include a binder, a conductive agent, or other optional additives.

For example, the conductive agent may include one or more of superconducting carbon, acetylene black, carbon black, Ketjen black, carbon dots, carbon nanotubes, graphene, and carbon nanofibers.

For example, the binder may include one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB).

For example, other optional additives may include a thickening and dispersing agent (for example, sodium carboxymethyl cellulose CMC-Na) and a PTC thermistor material.

[Electrolyte]

A battery may include an electrolyte, where the electrolyte conducts ions between the positive electrode and the negative electrode. The electrolyte may include an electrolytic salt and a solvent.

For example, the electrolytic salt may include one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO$_2$F$_2$), lithium difluoro(dioxalato)phosphate (LiDFOP), and lithium tetrafluoro oxalato phosphate (LiTFOP).

For example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments, the electrolyte further includes an additive. For example, the additive may include a negative electrode film-forming additive, or may include a positive electrode film-forming additive, or may include an additive capable of improving some performance of a battery, for example, an additive for improving overcharge performance of the battery, an additive for improving high-temperature performance of the battery, or an additive for improving low-temperature performance of the battery.

In some embodiments, the battery may be a lithium-ion secondary battery.

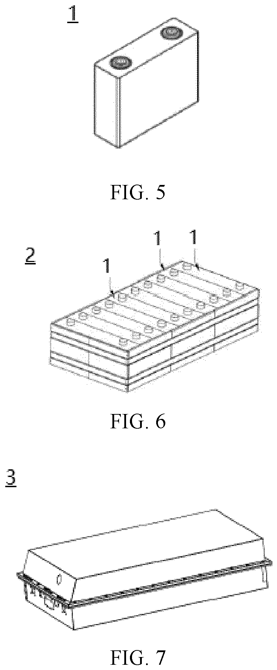

The battery is not particularly limited in shape in the embodiments of this application and may be cylindrical, rectangular, or of any other shape. FIG. 5 shows battery 1 as an example.

In some embodiments, the battery may include an outer package. The outer package is used for packaging a positive electrode plate, a negative electrode plate, and an electrolyte.

In some embodiments, the outer package may include a housing body and a cover plate. The housing body may include a base plate and side plates connected to the base plate, and the base plate and the side plates enclose an accommodating cavity. The housing body has an opening communicating with the accommodating cavity, and the cover plate can cover the opening to close the accommodating cavity.

A positive electrode plate, a negative electrode plate, and a separator may be made into an electrode assembly through winding or lamination. The electrode assembly is packaged in the accommodating cavity. The electrolyte may be a liquid electrolyte, and the liquid electrolyte infiltrates the electrode assembly. There may be one or more electrode assemblies in the battery, and the quantity may be adjusted as required.

In some embodiments, the outer package of the battery may be a hard shell, for example, a hard plastic shell, an aluminum shell, or a steel shell.

The outer package of the secondary battery may alternatively be a soft pack, for example, a soft pouch. A material of the soft pack may be plastic, for example, may include one or more of polypropylene (PP), polybutylene terephthalate (PBT), polybutylene succinate (PBS), and the like.

In some embodiments, batteries may be assembled into a battery module, and the battery module may include a plurality of batteries. The specific quantity may be adjusted based on use and capacity of the battery module.

FIG. 6 shows a battery module 2 as an example. Referring to FIG. 6, in the battery module 2, a plurality of batteries 1 may be sequentially arranged in a length direction of the battery module 2. Certainly, the batteries 1 may alternatively be arranged in any other manners. Further, the plurality of batteries 1 may be fastened by fasteners.

The battery module 2 may further include a housing with an accommodating space, and the plurality of secondary batteries 1 are accommodated in the accommodating space. In some embodiments, the battery module may be further assembled into a battery pack, and a quantity of battery modules included in the battery pack may be adjusted based on use and capacity of the battery pack.

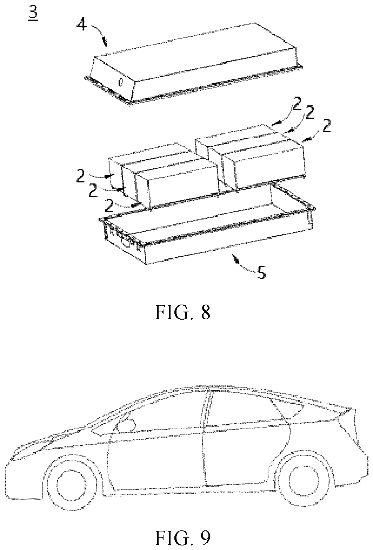

FIG. 7 and FIG. 8 show a battery pack 3 as an example. Referring to FIG. 7 and FIG. 8, the battery pack 3 may include a battery box and a plurality of battery modules 2 arranged in the battery box. The battery box includes an upper box body 4 and a lower box body 5. The upper box body 4 can cover the lower box body 5 to form an enclosed space for accommodating the battery modules 2. The plurality of battery modules 2 may be arranged in the battery box in any manner.

[Electric apparatus]

This application further provides an electric apparatus, where the electric apparatus includes the foregoing battery, and the battery is configured to provide electrical energy. Specifically, the battery may be used as a power source of the electric apparatus or may be used as an energy storage unit of the electric apparatus. The apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, or the like.

FIG. 9 shows an electric apparatus as an example. This electric apparatus is a battery electric vehicle, a hybrid electric vehicle, a plug-in hybrid electric vehicle, or the like.

In another example, the electric apparatus may be a mobile phone, a tablet computer, or a notebook computer. Such apparatus is generally required to be light and thin and may use a battery as its power source.

To describe the technical problems solved by the embodiments of this application, technical solutions, and beneficial effects more clearly, the following further describes this application in detail with reference to the embodiments and accompanying drawings. Apparently, the described embodiments are merely some but not all of the embodiments of this application. The following description of at least one exemplary embodiment is merely illustrative and definitely is not construed as any limitation on this application or on use of this application. All other embodiments obtained by persons of ordinary skill in the art based on the embodiments of this application without creative efforts shall fall within the protection scope of this application.

I. Preparation of separator

(1) A PE substrate was provided, with a thickness of 9 $\mu$m, a pore diameter of 50 nm, and a porosity of 38%.

(2) Preparation of coating slurry: Composite particles, a binder (having a glass transition temperature of about 10°C and including a binder polymer (with a median particle size of 1.1 $\mu$m) and a plasticizer in a mass ratio of 5:1 (where relative to the weight of the plasticizer, 8wt% plasticizer was grafted on the binder polymer), and some deionized water, where the binder polymer was a copolymer with 30% isobutyl acrylate + 25% isooctyl acrylate + 5% methacrylic acid-2-hydroxypropyl ester + 15% styrene + 22% acrylonitrile + 3% polyvinyl alcohol, and the plasticizer was glycerol) (a solid mass ratio of the composite particles to the binder was 90:10), and organic particles were mixed to uniformity in an appropriate amount of solvent deionized water, to obtain a coating slurry with a solid content of 12% (by weight).

(3) The coating slurry prepared in step (2) was applied on two surfaces of the PE substrate with a coater and then was dried, where a drying temperature was 50°C, and a drying time was 25s.

The above composite particles were prepared using the following steps:

a. At a room temperature, monomers needed were mixed at a ratio by weight percentage of 29wt% 2-hydroxyethyl acrylate, 35wt% n-butyl acrylate, 5wt% methyl methacrylate, 1wt% trimethylolpropane triacrylate, 20wt% acrylonitrile, and 10wt% acrylamide and stirred to uniformity, to obtain mixed monomers.

b. 2 kg of the mixed monomers, 60 g of a sodium lauryl sulfate emulsifier, 20 g of an ammonium persulfate initiator, and 40 kg of deionized water were added into a 10 L four-necked flask equipped with a mechanical stirring means, a thermometer, and a condenser tube, and were stirred and emulsified for 30 min at a rotation speed of 1600 rpm; the temperature was raised to 75°C under the protection of nitrogen, and after 4 hours of reaction, a NaOH aqueous solution with a concentration of 1wt% was used to adjust the pH to 6.5. The resulting product was then immediately cooled down to below 40°C, to obtain an organic polymer in an emulsion state, with a solid content of about 45wt%.

c. The above organic polymer of dry weight and aluminum oxide were added into an appropriate amount of deionized water in a mass ratio of 9:1 and stirred for 1 hour to be fully mixed, and then the solvent was removed through spray drying, to obtain powder. Then, the powder was ground and pulverized, to obtain composite particles with $D_v50$ of 5 μm.

All materials used in the examples can be obtained commercially. For example,

the organic particles may be purchased from Ruyuan East Sunshine Fluororesin Co., Ltd.;
the binder may be purchased from Sichuan Indigo Technology Co., Ltd.; and
the substrate may be purchased from Shanghai Energy New Materials Technology Co., Ltd.

Corresponding parameters for preparation process of separators 1-50 are shown in Tables 1 to 7.

Table 1

| | | | Separator 1 | Separator 2 | Separator 3 | Separator 4 | Separator 5 | Separator 6 | Separator 7 | Separator 8 | Separator 9 | Separator 10 |
|---|---|---|---|---|---|---|---|---|---|---|---|---|
| Composite particles | Polyacrylate particles | Composition | 29wt% 2-hydroxyethyl acrylate + 35wt% n-butyl acrylate + 5wt% methyl methacrylate + 1wt% trimethylolpropane triacrylate + 20wt% acrylonitrile + 10wt% acrylamide | 29wt% 2-hydroxyethyl acrylate + 30wt% n-butyl acrylate + 10wt% methyl methacrylate + 1wt% trimethylolpropane triacrylate + 20wt% acrylonitrile + 10wt% acrylamide | 25wt% 2-hydroxyethyl acrylate + 31wt% n-butyl acrylate + 8wt% methyl methacrylate + 1wt% trimethylolpropane triacrylate + 10wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8.4wt% methyl methacrylate + 0.6wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 10wt% 2-hydroxyethyl acrylate + 22wt% n-butyl acrylate + 7wt% methyl methacrylate + 1wt% trimethylolpropane triacrylate + 25wt% acrylonitrile + 35wt% acrylamide | 19wt% 2-hydroxyethyl acrylate + 20wt% n-butyl acrylate + 3wt% methyl methacrylate + 11wt% acrylic acid + 6wt% isooctyl acrylate + 1wt% trimethylolpropane triacrylate + 20wt% acrylonitrile + 20wt% acrylamide | 17wt% 2-hydroxyethyl acrylate + 20wt% n-butyl acrylate + 1.5wt% methyl methacrylate + 15wt% acrylic acid + 5wt% isooctyl acrylate + 1.5wt% trimethylolpropane triacrylate + 20wt% acrylonitrile + 20wt% acrylamide | 19wt% 2-hydroxyethyl acrylate + 27wt% n-butyl acrylate + 7.8wt% methyl methacrylate + 1.2wt% trimethylolpropane triacrylate + 20wt% acrylonitrile + 25wt% acrylamide |
| | | Proportion of component (%) | 90 | 90 | 90 | 90 | 90 | 90 | 90 | 90 | 90 | 90 |
| | | $D_v50$ of composite particles (μm) | 5 | 5 | 5 | 5 | 5 | 5 | 5 | 5 | 5 | 5 |

EP 4 395 042 A1

(continued)

| | | | Separator 1 | Separator 2 | Separator 3 | Separator 4 | Separator 5 | Separator 6 | Separator 7 | Separator 8 | Separator 9 | Separator 10 |
|---|---|---|---|---|---|---|---|---|---|---|---|---|
| Inorganic particles | Composition | | Aluminum oxide | Aluminum oxide | Aluminum oxide | Aluminum oxide | Aluminum oxide | Silicon dioxide | Aluminum oxide | Aluminum oxide | Aluminum oxide | Aluminum oxide |
| | Proportion of component (%) | | 10 | 10 | 10 | 10 | 10 | 10 | 10 | 10 | 10 | 10 |
| | (D90-D10)/D50 | | 1.76 | 1.76 | 1.76 | 1.76 | 1.76 | 1.76 | 1.76 | 1.76 | 1.76 | 1.76 |
| | Glass transition temperature Tg (°C) | | 20 | 30 | 40 | 60 | 60 | 60 | 80 | 55 | 57 | 60 |
| | Crosslinking degree a (%) | | 78 | 78 | 78 | 78 | 75 | 78 | 78 | 80 | 85 | 85 |
| | Mass swelling degree b (%) | | 75 | 70 | 65 | 60 | 55 | 60 | 50 | 50 | 45 | 40 |
| | a/b | | 1.0 | 1.1 | 1.2 | 1.3 | 1.4 | 1.3 | 1.6 | 1.6 | 1.9 | 2.1 |
| Bulges | Two-side height of bulges (μm) | | 20 | 20 | 20 | 20 | 20 | 20 | 20 | 20 | 20 | 20 |
| | Composition of organic particles | | / | / | / | / | / | / | / | / | / | / |
| | Mass ratio of composite particles to organic particles | | / | / | / | / | / | / | / | / | / | / |

EP 4 395 042 A1

**Table 2**

| | | | Separator 11 | Separator 12 | Separator 13 | Separator 14 | Separator 15 | Separator 16 | Separator 17 | Separator 18 | Separator 19 | Separator 20 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component (%) | 90 | 90 | 90 | 90 | 90 | 99 | 98 | 95 | 92 | 88 |
| | | $D_v50$ of composite particles ($\mu$m) | 2.5 | 4 | 6 | 8 | 10 | 5 | 5 | 5 | 5 | 5 |
| | Inorganic particles | Composition | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | | Proportion of component (%) | 10 | 10 | 10 | 10 | 10 | 1 | 2 | 5 | 8 | 12 |
| | | (D90-D10)/D50 | 1.76 | 1.76 | 1.76 | 1.76 | 1.76 | 1.76 | 1.76 | 1.76 | 1.76 | 1.76 |

(continued)

| | | Separator 11 | Separator 12 | Separator 13 | Separator 14 | Separator 15 | Separator 16 | Separator 17 | Separator 18 | Separator 19 | Separator 20 |
|---|---|---|---|---|---|---|---|---|---|---|---|
| | Glass transition temperature Tg (°C) | 60 | 60 | 60 | 60 | 60 | 60 | 60 | 60 | 60 | 60 |
| | Crosslinking degree a (%) | 78 | 78 | 78 | 78 | 78 | 78 | 78 | 78 | 78 | 78 |
| | Mass swelling degree b (%) | 60 | 60 | 60 | 60 | 60 | 60 | 60 | 60 | 60 | 60 |
| | a/b | 1.3 | 1.3 | 1.3 | 1.3 | 1.3 | 1.3 | 1.3 | 1.3 | 1.3 | 1.3 |
| Bulges | Two-side height of bulges (μm) | 20 | 20 | 20 | 20 | 20 | 20 | 20 | 20 | 20 | 20 |
| | Composition of organic particles | - | - | - | - | - | - | - | - | - | - |
| | Mass ratio of composite particles to organic particles | - | - | - | - | - | - | - | - | - | - |

**Table 3**

| | | | Separator 21 | Separator 22 | Separator 23 | Separator 24 | Separator 25 | Separator 26 | Separator 27 | Separator 28 | Separator 29 | Separator 30 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8.4wt% methyl methacrylate + 0.6wt% trimethylolpropane triacrylate + 20wt% acrylonitrile + 25wt% acrylamide | 19wt% 2-hydroxyethyl acrylate + 27wt% n-butyl acrylate + 8.4wt% methyl methacrylate + 0.6wt% trimethylolpropane triacrylate + 20wt% acrylonitrile + 25wt% acrylamide |
| | | Proportion of component (%) | 85 | 83 | 60 | 50 | 90 | 90 | 90 | 90 | 90 | 90 |
| | | $D_v50$ of composite particles ($\mu$m) | 5 | 5 | 5 | 5 | 5 | 5 | 5 | 5 | 5 | 5 |
| | Inorganic particles | Composition | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | | Proportion of component (%) | 15 | 17 | 40 | 50 | 10 | 10 | 10 | 10 | 10 | 10 |
| | | (D90-D10)/D50 | 1.76 | 1.76 | 1.76 | 1.76 | 1.76 | 1.76 | 1.76 | 1.76 | 1.76 | 1.76 |

(continued)

| | | Separator 21 | Separator 22 | Separator 23 | Separator 24 | Separator 25 | Separator 26 | Separator 27 | Separator 28 | Separator 29 | Separator 30 |
|---|---|---|---|---|---|---|---|---|---|---|---|
| | Glass transition temperature Tg (°C) | 60 | 60 | 60 | 60 | 60 | 60 | 60 | 60 | 60 | 60 |
| | Crosslinking degree a (%) | 78 | 78 | 78 | 78 | 78 | 78 | 78 | 78 | 80 | 80 |
| | Mass swelling degree b (%) | 60 | 60 | 60 | 60 | 60 | 60 | 60 | 60 | 60 | 60 |
| | a/b | 1.3 | 1.3 | 1.3 | 1.3 | 1.3 | 1.3 | 1.3 | 1.3 | 1.3 | 1.3 |
| Bulges | Two-side height of bulges ($\mu$m) | 20 | 20 | 20 | 20 | 15 | 25 | 40 | 60 | 20 | 20 |
| | Composition of organic particles | / | / | / | / | / | / | / | / | Polyvinyl fluoride | Polyvinyl fluoride |
| | Mass ratio of composite particles to organic particles | / | / | / | / | / | / | / | / | 70:20 | 60:30 |

EP 4 395 042 A1

**Table 4**

| | | | Separator 31 | Separator 32 | Separator 33 | Separator 34 | Separator 35 | Separator 36 | Separator 37 | Separator 38 | Separator 39 | Separator 40 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8.4wt% methyl methacrylate + 0.6wt% trimethylolpropane triacrylate + 20wt% acrylonitrile + 25wt% acrylamide | 19wt% 2-hydroxyethyl acrylate + 27wt% n-butyl acrylate + 8.4wt% methyl methacrylate + 0.6wt% trimethylolpropane triacrylate + 20wt% acrylonitrile + 25wt% acrylamide | 19wt% 2-hydroxyethyl acrylate + 27wt% n-butyl acrylate + 8.4wt% methyl methacrylate + 0.6wt% trimethylolpropane triacrylate + 20wt% acrylonitrile + 25wt% acrylamide | 19wt% 2-hydroxyethyl acrylate + 27wt% n-butyl acrylate + 8.4wt% methyl methacrylate + 0.6wt% trimethylolpropane triacrylate + 20wt% acrylonitrile + 25wt% acrylamide | 19wt% 2-hydroxy ethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxy ethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxy ethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component (%) | 90 | 90 | 90 | 90 | 90 | 99.9 | 90 | 99.9 | 45 | 90 |
| | | $D_v50$ of composite particles ($\mu$m) | 5 | 5 | 5 | 5 | 1.5 | 5 | 1.5 | 5 | 5 | 5 |
| | Inorganic particles | Composition | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | | Proportion of component (%) | 10 | 10 | 10 | 10 | 10 | 0.1 | 10 | 0.1 | 55 | 10 |
| | | (D90-D10)/D50 | 1.76 | 1.76 | 1.76 | 1.76 | 1.76 | 1.76 | 1.76 | 1.76 | 1.76 | 1.76 |

(continued)

| | | Separator 31 | Separator 32 | Separator 33 | Separator 34 | Separator 35 | Separator 36 | Separator 37 | Separator 38 | Separator 39 | Separator 40 |
|---|---|---|---|---|---|---|---|---|---|---|---|
| | Glass transition temperature Tg (°C) | 60 | 60 | 60 | 60 | 100 | 60 | 60 | 60 | 60 | 60 |
| | Crosslinking degree a (%) | 80 | 80 | 80 | 80 | 78 | 78 | 78 | 78 | 78 | 78 |
| | Mass swelling degree b (%) | 60 | 60 | 60 | 60 | 50 | 60 | 60 | 60 | 60 | 60 |
| | a/b | 1.3 | 1.3 | 1.3 | 1.3 | 1.6 | 1.3 | 1.3 | 1.3 | 1.3 | 1.3 |
| | Two-side height of bulges (μm) | 20 | 20 | 20 | 20 | 20 | 20 | 20 | 20 | 20 | 70 |
| Bulges | Composition of organic particles | Polyvinyl fluoride | Polyvinyl fluoride | Polyvinyl fluoride | Polyvinyl fluoride | / | / | / | / | / | / |
| | Mass ratio of composite particles to organic particles | 50:40 | 45:45 | 20:70 | 25:65 | / | / | / | / | / | / |

**Table 5**

| | | | Separator 41 | Separator 42 | Separator 43 | Separator 44 | Separator 45 | Separator 46 | Separator 47 | Separator 48 | Separator 49 | Separator 50 |
|---|---|---|---|---|---|---|---|---|---|---|---|---|
| Composite particles | Polyacrylate particles | Composition | 19wt% 2-hydroxyethyl acrylate + 27wt% n-butyl acrylate + 7.5wt% methyl methacrylate + 1.5wt% trimethylolpropane triacrylate + 20wt% acrylonitrile + 25wt% acrylamide | 19wt% 2-hydroxyethyl acrylate + 27wt% n-butyl acrylate + 7.0wt% methyl methacrylate + 2wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19.5wt% 2-hydroxyethyl acrylate + 26wt% n-butyl acrylate + 7.5wt% methyl methacrylate + 2wt% divinylbenzene + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27.4wt% n-butyl acrylate + 8wt% methyl methacrylate + 0.6wt% trimethylolpropane triacrylate + 20wt% acrylonitrile + 25wt% acrylamide | 19wt% 2-hydroxyethyl acrylate + 27wt% n-butyl acrylate + 9wt% methyl methacrylate + 0wt% trimethylolpropane triacrylate + 20wt% acrylonitrile + 25wt% acrylamide | 19wt% 2-hydroxyethyl acrylate + 27wt% n-butyl acrylate + 8.9wt% methyl methacrylate + 0.1wt% trimethylolpropane triacrylate + 20wt% acrylonitrile + 25wt% acrylamide | 19wt% 2-hydroxyethyl acrylate + 27wt% n-butyl acrylate + 8.7wt% methyl methacrylate + 0.3wt% trimethylolpropane triacrylate + 20wt% acrylonitrile + 25wt% acrylamide | 29wt% 2-hydroxyethyl acrylate + 40wt% n-butyl acrylate + 5wt% methyl methacrylate + 1wt% trimethylolpropane triacrylate + 20wt% acrylonitrile + 5wt% acrylamide |
| | | Proportion of component (%) | 90 | 90 | 90 | 90 | 90 | 90 | 90 | 90 | 90 | 90 |
| | | $D_v50$ of composite particles ($\mu$m) | 5 | 5 | 5 | 5 | 5 | 5 | 5 | 5 | 5 | 5 |
| | Inorganic particles | Composition | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | | Proportion of component (%) | 10 | 10 | 10 | 10 | 10 | 10 | 10 | 10 | 10 | 10 |
| | | (D90-D10)/D50 | 1.76 | 1.76 | 1.76 | 1.76 | 1.76 | 1.76 | 1.76 | 1.76 | 1.76 | 1.76 |

| | | Separator 41 | Separator 42 | Separator 43 | Separator 44 | Separator 45 | Separator 46 | Separator 47 | Separator 48 | Separator 49 | Separator 50 |
|---|---|---|---|---|---|---|---|---|---|---|---|
| | Glass transition temperature Tg (°C) | 60 | 60 | 60 | 55 | 60 | 60 | 60 | 60 | 60 | 10 |
| | Crosslinking degree a (%) | 89 | 92 | 70 | 70 | 70 | 65 | 20 | 55 | 65 | 60 |
| | Mass swelling degree b (%) | 35 | 35 | 45 | 40 | 80 | 90 | 400 | 180 | 150 | 200 |
| | a/b | 2.5 | 2.6 | 1.6 | 1.8 | 0.9 | 0.7 | 0.1 | 0.3 | 0.4 | 0.3 |
| Bulges | Two-side height of bulges (μm) | 20 | 20 | 20 | 20 | 20 | 20 | 20 | 20 | 20 | 20 |
| | Composition of organic particles | / | / | / | / | / | / | / | / | / | / |
| | Mass ratio of composite particles to organic particles | / | / | / | / | / | / | / | / | / | / |

EP 4 395 042 A1

II. Preparation of battery

Example 1

1. Preparation of positive electrode plate

A positive electrode active material $LiNi_{0.8}Co_{0.1}Mn_{0.1}O_2$ (NCM811), a conductive agent carbon black (Super P), and a binder polyvinylidene fluoride (PVDF) were mixed to uniformity in a mass ratio of 96.2:2.7:1 in an appropriate amount of solvent N-methylpyrrolidone (NMP), to obtain a positive electrode slurry. The positive electrode slurry was applied on a positive electrode current collector aluminum foil, followed by processes including drying, cold pressing, slitting, and cutting, to obtain a positive electrode plate. A positive electrode had a surface density of 0.207 $mg/mm^2$ and a compacted density of 3.5 $g/cm^3$.

(2) Preparation of negative electrode plate

A negative electrode active material graphite, a conductive agent carbon black (Super P), a binder butadiene styrene rubber (SBR), and sodium carboxymethyl cellulose (CMC-Na) were mixed to uniformity in a mass ratio of 96.4:0.7:1.8:1.1 in an appropriate amount of solvent deionized water, to obtain a negative electrode slurry. The negative electrode slurry was applied on a negative electrode current collector copper foil, followed by processes including drying, cold pressing, slitting, and cutting, to obtain a negative electrode plate. A negative electrode had a surface density of 0.126 $mg/mm^2$ and a compacted density of 1.7 $g/cm^3$.

3. Separator

The separator 1 prepared above was used as the separator.

4. Preparation of electrolyte

Ethylene carbonate (EC) and ethyl methyl carbonate (EMC) were mixed in a mass ratio of 3:5 to obtain an organic solvent. A fully dried electrolytic salt $LiPF_6$ was dissolved in the mixed solvent, with a concentration of 1.0 mol/L. Then, the resulting mixture was mixed to uniformity to obtain an electrolyte.

5. Preparation of battery

The positive electrode plate, the separator, and the negative electrode plate were sequentially stacked so that the separator was located between the positive electrode plate and the negative electrode plate to provide separation. Then, the resulting stack was wound to form an electrode assembly. The electrode assembly was placed in the outer package and the prepared electrolyte was injected into the secondary battery that was dried, followed by processes including vacuum packaging, standing, formation, and shaping, to obtain a secondary battery.

The preparation methods for secondary batteries in Examples 2-42 and Comparative examples 1-8 were similar to that of the battery in Example 1, except for different separators used. The separators 2-42 were used for the secondary batteries in Examples 2-42, and the separators 43-50 were used for the secondary batteries in Comparative examples 1-8.

III. Evaluation of adhesion performance of separator

The test procedure is as follows:

1. A prepared separator with 300 mm in length $\times$ 100 mm in width and the positive and negative electrode plates prepared above were selected.

2. The upper and lower surfaces of the separator were wrapped with paper, and the separator was punched into a 54.2 mm $\times$ 72.5 mm sample using a cutting die and a punching machine.

3. The punched separator sample and the positive electrode plate were stacked neatly. 130 mm $\times$ 130 mm Teflon (teflon) was placed on each of the upper and lower surfaces, and the stacked sample was put in the middle of a 200 mm $\times$ 200 mm cardboard and covered with a piece of 150 mm $\times$ 160 mm cardboard.

4. The stacked sample was placed into a flat press, the pressure and air pressure were adjusted, and pressing was performed, where pressure of the flat press = 3500 KG$\pm$ 10 KG (with a contact area of about 50 mm $\times$ 100 mm and an actual pressure of about 7 MPa after conversion), T = 25°C was set, and time was set to 10s.

5. The hot pressed sample was punched into 72.5 mm $\times$ 15 mm strips using the cutting die and the punching machine.

6. The positive electrode plate was fastened to a steel plate with a double-sided tape on one surface and was bonded to a separator on the other surface, and an A4 paper strip with a width of 15 mm was bonded to the separator using a double-sided tape, and a sample under test was prepared.

7. A Gotech tensile machine was powered on, and parameters were set as follows in sequence: adhesive force test, speed of 50 mm/min, and an initial clamp spacing of 40 mm.

8. The test sample was placed between clamps, an end of the steel plate was fastened to a lower clamping head, and the A4 paper was fastened to an upper clamping head. The upper and lower clamping heads were clamped with respective clamps.

9. A stretching operation screen on the computer desktop was clicked, and force, displacement, and the like were set to zero. "Start" was clicked to perform a pre-stretch for about 5 mm; after the pre-stretch, the force, displacement, and the like were reset to zero; then, the test was started. During the test, the steel plate for fastening the electrode plate was fastened, and the A4 paper strip was pulled upward with the tensile machine to separate the separator from the positive electrode plate.

After the test was completed, complete data was exported and stored.

10. At least 5 test samples were measured in each group, and if curve repeatability of the adhesive force test of the 5 test samples was relatively good, testing was then performed for a next group; otherwise, the test was further performed until good repeatability was obtained for 5 test samples.

11. After the test was completed, a curve of adhesion strength (N/m)-displacement was made to take an average value of the 100th to 300th data points as the adhesive force, where the measured adhesive force was recorded as $F_1$.

12. Steps 1-11 were repeated, where the pressure was changed to 1500 Kg $\pm$ 10 KG in step 4 (the actual pressure was equivalent to about 3 MPa after conversion), and the temperature T was changed to 95°C, and the adhesive force was recorded as $F_2$.

IV Method for testing compressive modulus of separator

Pretreatment of sample:

1. A separator was punched using a cutting die, with a stacking sequence of cutting die/white paper/separator/white paper/pressure block; 5 layers were punched at one time, and 100 layers formed a group; and 3 groups of parallel samples were made, with a sample size of 60 mm * 70 mm.

2. Punching was performed using a guillotine cutter to obtain an aluminum-plastic film with a size of 90 mm * 200 mm.

3. The aluminum-plastic film was folded along a length direction; central positions of four sides of the punched separator sample were fastened using a green adhesive tape, and the sample was then placed in a pocket.

4. A top and side sealing machine was used to laterally seal two long sides of the sample, then the sample was vacuumized, and the top of the sample was sealed, where the sealing machine had a heating temperature of 185°C.

5. A spacer was placed at the central position of the sealed sample, marked with a frame drawn.

6. Thickness of the separator in the marked position was measured with a ten-thousandth micrometer, with 4 points on the long side and 3 points on the shorter side.

Sample test:

1. An in-situ expansion test system IEST SWE2110 was started with operating software MISS started and pressure calibrated, followed by selection of compression experiment (transient) and thickness calibration.

2. A sample was placed between upper and lower clamps, and the upper clamp was moved to ensure that the upper clamp was located at the position of the sample that had been marked with the frame drawn.

3. The MISS software was clicked to start the experiment, after the test was completed, thickness M1 of the sample was measured, and clamp indentation positions on the upper and lower surfaces of the sample were marked with a marker pen.

4. Steps 2 and 3 were repeated to run the test again.

Data processing:

1.

Stress = pressure * 10 / clamp area; deformation = initial thickness (M1) - real-time thickness; and strain = deformation / initial thickness.

2. With strain as the horizontal coordinate and stress as the vertical coordinate, a stress-strain curve was drawn; linear fitting of the stress/strain curve under 3 MPa-5 MPa was performed to obtain the compressive modulus of the separator.

V Evaluation of resistance performance of separator

The test procedure is as follows:

(1) Preparation of separator: Separators under test were cut into same-sized samples (45.3 mm * 33.7 mm), and the samples were then dried for at least 4 h in an environment at 60°C and quickly transferred to a class 100 cleanroom glove box at 25°C for later use.
(2) Preparation of symmetric battery region-limited pocket (symmetric battery region-limited aluminum-plastic pocket (an aluminum-plastic pocket is a generic commodity with polypropylene and aluminum foil compounded for pouch batteries)): A blank symmetric battery was assembled with Cu Foil to Cu Foil (copper foil to copper foil) as a current collector. The region limitation of the pocket was implemented by punching in the middle through a green adhesive tape. Before use, the pocket needed to be dried for at least 4 h in an environment at 60°C and then quickly transferred to the class 100 cleanroom glove box at 25°C described in (1) above for later use.
(3) Assembly of symmetric battery: An anode plate was used as an electrode, 5 groups of symmetric battery samples with different numbers of separator layers (1 layer, 2 layers, 3 layers, 4 layers, and 5 layers) were assembled in situ in the glove box described in (1) above, there were 5 parallel samples in each group of samples, sides of the pocket were sealed using a simple sealing machine, electrolyte (300 μL) was injected using a pipette, and bottom sealing was performed.
(4) Loading of assembled symmetric battery on clamp: The assembled symmetric battery was placed in the glove box described in (1) above overnight such that the electrolyte fully infiltrated the separator; on the following day, the assembled symmetric battery was loaded on a metal clamp, with pressure of the clamp controlled to be 0.7 MPa.
(5) Measurement of electrochemical impedance spectroscopy (EIS)
Before measurement, the symmetric batteries with different numbers of separator layers were placed in a high and low temperature chamber with a constant temperature of 25°C for half an hour, and the EIS at the specified temperature (25°C) was measured (if the temperature was low (for example, -25°C to 0°C), the time of constant temperature could be extended accordingly, for example, about two hours).
(6) The French Bio-Logic VMP3 electrochemical workstation was used, with voltage < 5 V, current < 400 mA, and current accuracy of 0.1% * 100 μA. During measurement, measurement conditions of EIS were as follows: voltage frequency was set to 1 MHz-1 kHz, perturbation voltage was set to 5 MV, and pressure of the clamp was controlled at 0.7 MPa.
(7) A scatter plot of a negative imaginary part was made using a real part of EIS data, data of parallel samples with different layers and same layers were drawn on one plot, and the obtained EIS plot was used as comparison of original EIS data.
(8) The points in the non-first quadrant of the EIS plot obtained in (7) above were removed to obtain a new EIS plot. Linear fitting was performed on the scatter points in the first quadrant in the new EIS plot to obtain a correlation equation, and given y = 0, the x value which was the desired resistance value of the electrolyte in the separator was obtained. By analogy, the measured EIS data could be subjected to linear fitting to obtain resistance values of the parallel samples with the different layers.

VI. Battery performance test

1. Cycling performance of secondary battery under pre-tightening force of 0.1 MPa

(1) Cycling performance at 25°C

At 25°C, the secondary battery prepared in the examples and comparative examples was fastened using three steel clamps, a 1 mm single-side heat insulation pad was provided between the clamp and the battery, and a pre-tightening force of 0.1 MPa was applied; then the battery was charged to a charge cut-off voltage of 4.2 V at a constant current of 1C, then charged to a current $\leq 0.05C$ at a constant voltage, left standing for 5 min, then discharged to a discharge cut-off voltage of 2.8 V at a constant current of 0.33C, and left standing for 5 min. A battery capacity at that time was recorded as $C_0$. The battery was charged and discharged for 1500 cycles using the method, and the battery capacity after 1500 cycles was recorded as $C_1$.

$$\text{Cycling capacity retention rate of the battery at } 25°C = C_1/C_0 \times 100\%.$$

(2) Cycling performance at 45°C

At 45°C, the secondary battery prepared in the examples and comparative examples was fastened using three steel clamps, a 1 mm single-side heat insulation pad was provided between the clamp and the battery, and a pre-tightening force of 0.1 MPa was applied; then the battery was charged to a charge cut-off voltage of 4.2 V at a constant current of 1C, then charged to a current $\leq 0.05C$ at a constant voltage, left standing for 5 min, then discharged to a discharge cut-off voltage of 2.8 V at a constant current of 0.33C, and left standing for 5 min. A battery capacity at that time was recorded as $C_0$. The battery was charged and discharged for 1500 cycles using the method. The battery capacity at this point was recorded as $C_1$.

$$\text{Cycling capacity retention rate of the battery at } 45°C = C_1/C_0 \times 100\%.$$

2. Cycling performance of secondary battery under pre-tightening force of 0.5 MPa

(1) Cycling performance at 25°C

At 25°C, the secondary battery prepared in the examples and comparative examples was fastened using three steel clamps, a 1 mm single-side heat insulation pad was provided between the clamp and the battery, and a pre-tightening force of 0.5 MPa was applied; then the battery was charged to a charge cut-off voltage of 4.2 V at a constant current of 1C, then charged to a current $\leq 0.05C$ at a constant voltage, left standing for 5 min, then discharged to a discharge cut-off voltage of 2.8 V at a constant current of 0.33C, and left standing for 5 min. A battery capacity at that time was recorded as $C_0$. The battery was charged and discharged for 1500 cycles using the method, and the battery capacity after 1500 cycles was recorded as $C_1$.

$$\text{Cycling capacity retention rate of the battery at } 25°C = C_1/C_0 \times 100\%.$$

(2) Cycling performance at 45°C

At 45°C, the secondary battery prepared in the examples and comparative examples was fastened using three steel clamps, a 1 mm single-side heat insulation pad was provided between the clamp and the battery, and a pre-tightening force of 0.5 MPa was applied; then the battery was charged to a charge cut-off voltage of 4.2 V at a constant current of 1C, then charged to a current $\leq 0.05C$ at a constant voltage, left standing for 5 min, then discharged to a discharge cut-off voltage of 2.8 V at a constant current of 0.33C, and left standing for 5 min. A battery capacity at that time was recorded as $C_0$. The battery was charged and discharged for 1500 cycles using the method. The battery capacity at this point was recorded as $C_1$.

$$\text{A cycling capacity retention rate of the battery at } 45°C = C_1/C_0 \times 100\%.$$

The tested performance data of the separators and the batteries of examples 1-42 and comparative examples 1-8 is given in Table 6.

Table 6

| | Adhesive force to positive electrode $F_1$(N/m) (25°C-7 MPa-10s) | Adhesive force to positive electrode $F_2$(N/m) (95°C-7 MPa-10s) | $F_2/F_1$ | Separator resistance (Ω) | Compressive modulus (MPa) | Pre-tightening force 0.1 MPa | | Pre-tightening force 0.5 MPa | |
|---|---|---|---|---|---|---|---|---|---|
| | | | | | | Cycling retention rate at 25°C (%) | Cycling retention rate at 45°C (%) | Cycling retention rate at 25°C (%) | Cycling retention rate at 45°C (%) |
| Example 1 | 1.5 | 3.7 | 2.5 | 1.8 | 60 | 85 | 82 | 80 | 80 |
| Example 2 | 1.4 | 3.2 | 2.3 | 1.7 | 65 | 86 | 84 | 81 | 80 |
| Example 3 | 1.2 | 2.8 | 2.3 | 1.65 | 67 | 87 | 85 | 82 | 80 |
| Example 4 | 1 | 2.5 | 2.5 | 1.2 | 75 | 88 | 87 | 86 | 85 |
| Example 5 | 1.5 | 3 | 2.0 | 1.6 | 78 | 85 | 84 | 82 | 80 |
| Example 6 | 1.2 | 2.3 | 1.9 | 1.22 | 79 | 86 | 85 | 83 | 82 |
| Example 7 | 0.8 | 2.4 | 3.0 | 1.35 | 82 | 85 | 84 | 83 | 82 |
| Example 8 | 0.5 | 1.8 | 3.6 | 1.4 | 70 | 84 | 82 | 80 | 80 |
| Example 9 | 0.4 | 1.6 | 4.0 | 1.45 | 72 | 83 | 81 | 80 | 80 |
| Example 10 | 0.7 | 2.8 | 4.0 | 1.15 | 78 | 87 | 85 | 82 | 81 |
| Example 11 | 0.8 | 1.95 | 2.4 | 1.5 | 70 | 82 | 81 | 80 | 80 |
| Example 12 | 0.9 | 2.3 | 2.6 | 1.4 | 71 | 85 | 83 | 81 | 81 |
| Example 13 | 0.95 | 2.5 | 2.6 | 1.29 | 73 | 87 | 84 | 82 | 82 |
| Example 14 | 0.8 | 2.3 | 2.9 | 1.3 | 74 | 86 | 85 | 82 | 82 |
| Example 15 | 0.85 | 2.25 | 2.6 | 1.57 | 68 | 85 | 82 | 81 | 80 |
| Example 16 | 1.2 | 4 | 3.3 | 1.45 | 65 | 84 | 83 | 82 | 80 |
| Example 17 | 1.15 | 3 | 2.6 | 1.4 | 68 | 85 | 82 | 83 | 80 |
| Example 18 | 1.1 | 2.8 | 2.5 | 1.3 | 74 | 87 | 86 | 84 | 84 |
| Example 19 | 0.9 | 2.6 | 2.9 | 1.33 | 72 | 85 | 84 | 82 | 82 |
| Example 20 | 0.8 | 2.3 | 2.9 | 1.35 | 73 | 87 | 85 | 83 | 83 |
| Example 21 | 0.7 | 2.25 | 3.2 | 1.38 | 70 | 85 | 84 | 82 | 82 |

(continued)

| | Adhesive force to positive electrode F$_1$ (N/m) (25°C-7 MPa-10s) | Adhesive force to positive electrode F$_2$ (N/m) (95°C-7 MPa-10s) | F$_2$/F$_1$ | Separator resistance (Ω) | Compressive modulus (MPa) | Pre-tightening force 0.1 MPa | | Pre-tightening force 0.5 MPa | |
|---|---|---|---|---|---|---|---|---|---|
| | | | | | | Cycling retention rate at 25°C (%) | Cycling retention rate at 45°C (%) | Cycling retention rate at 25°C (%) | Cycling retention rate at 45°C (%) |
| Example 22 | 0.5 | 1.75 | 3.5 | 1.48 | 64 | 83 | 82 | 81 | 80 |
| Example 23 | 0.5 | 1.6 | 3.2 | 1.52 | 63 | 83 | 80 | 80 | 78 |
| Example 24 | 0.4 | 1.5 | 3.8 | 1.62 | 60 | 82 | 80 | 80 | 78 |
| Example 25 | 0.8 | 2.3 | 2.9 | 1.25 | 72 | 86 | 85 | 84 | 83 |
| Example 26 | 0.9 | 2.2 | 2.4 | 1.35 | 70 | 85 | 83 | 82 | 81 |
| Example 27 | 0.7 | 2.1 | 3.0 | 1.38 | 67 | 84 | 83 | 81 | 80 |
| Example 28 | 0.55 | 1.95 | 3.5 | 1.6 | 65 | 82 | 80 | 80 | 78 |
| Example 29 | 1.1 | 2 | 1.8 | 1.25 | 65 | 86 | 86 | 83 | 83 |
| Example 30 | 1.2 | 1.8 | 1.5 | 1.3 | 70 | 85 | 85 | 82 | 81 |
| Example 31 | 1.25 | 1.75 | 1.4 | 1.32 | 71 | 84 | 85 | 82 | 81 |
| Example 32 | 1.28 | 1.7 | 1.3 | 1.35 | 72 | 83 | 82 | 80 | 80 |
| Example 33 | 1.3 | 1.6 | 1.2 | 1.5 | 73 | 82 | 81 | 78 | 78 |
| Example 34 | 1.34 | 1.58 | 1.2 | 1.65 | 74 | 82 | 81 | 76 | 75 |
| Example 35 | 0 | 0.8 | NA | 1.3 | 65 | 78 | 75 | 72 | 70 |
| Example 36 | 0 | 0.4 | NA | 1.25 | 70 | 75 | 73 | 70 | 69 |
| Example 37 | 0.2 | 1 | 5.0 | 1.94 | 58 | 78 | 77 | 65 | 60 |
| Example 38 | 1.25 | 5.5 | 4.4 | 1.89 | 65 | 79 | 75 | 70 | 68 |
| Example 39 | 0.2 | 1.2 | 6.0 | 2.2 | 58 | 75 | 70 | 64 | 60 |
| Example 40 | 0.2 | 1.4 | 7.0 | 2.3 | 50 | 70 | 68 | 60 | 60 |
| Example 41 | 0.5 | 2.5 | 5.0 | 1.06 | 58 | 78 | 75 | 70 | 65 |
| Example 42 | 0 | 1.9 | NA | 1.2 | 59 | 75 | 72 | 69 | 67 |

| | Adhesive force to positive electrode $F_1$(N/m) (25°C-7 MPa-10s) | Adhesive force to positive electrode $F_2$(N/m) (95°C-7 MPa-10s) | $F_2/F_1$ | Separator resistance (Q) | Compressive modulus (MPa) | Pre-tightening force 0.1 MPa | | Pre-tightening force 0.5 MPa | |
| --- | --- | --- | --- | --- | --- | --- | --- | --- | --- |
| | | | | | | Cycling retention rate at 25°C (%) | Cycling retention rate at 45°C (%) | Cycling retention rate at 25°C (%) | Cycling retention rate at 45°C (%) |
| Comparative example 1 | 0.1 | 2.5 | 25.0 | 1.3 | 50 | 69 | 65 | 57 | 56 |
| Comparative example 2 | 0 | 2.9 | NA | 1.27 | 45 | 69 | 62 | 55 | 54 |
| Comparative example 3 | 0.6 | 2.7 | 4.5 | 1.5 | 45 | 67 | 63 | 60 | 55 |
| Comparative example 4 | 0.7 | 3 | 4.3 | 2.5 | 48 | 65 | 60 | 56 | 50 |
| Comparative example 5 | 3.5 | 5.8 | 1.7 | 2.9 | 40 | 55 | 50 | 45 | 43 |
| Comparative example 6 | 2.8 | 5.2 | 1.9 | 2 | 50 | 65 | 63 | 58 | 50 |
| Comparative example 7 | 2.2 | 3.9 | 1.8 | 1.9 | 55 | 68 | 65 | 60 | 52 |
| Comparative example 8 | 2 | 5 | 2.5 | 2.6 | 52 | 67 | 64 | 59 | 52 |

EP 4 395 042 A1

It can be seen from Table 6 that the adhesive force of the separator to the positive electrode in examples 1-42 at 25°C and 7 MPa is 0.2 N/m-1.5 N/m; the adhesive force of the separator to the positive electrode in examples 1-42 at 95°C and 3 MPa is 0.4 N/m-5.5 N/m, and the separator in examples 1-42 has a resistance not higher than 2.3 Q and a compressive modulus of 50 MPa-82 MPa; and cycling capacity retention rates of the battery in examples 1-42 under pre-tightening forces of 0.1 MPa and 0.5 MPa are all superior to that in examples 1-8. This indicates that the separator of this application has an appropriate adhesive force to the electrode plate and a low resistance, so that the kinetic performance and safety performance of the battery can be improved.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A separator, comprising:

   a substrate; and
   a coating, wherein the coating is formed on at least a portion of surface of the substrate, and the coating comprises composite particles and a binder, the composite particles form bulges on surface of the coating, and the composite particles comprise polyacrylate particles and inorganic particles, wherein the inorganic particle is present between at least two of the polyacrylate particles, and crosslinking degree a of the composite particles and mass swelling degree b thereof in an electrolyte satisfy $a/b \geq 1$ and $a \geq 75\%$.

2. The separator according to claim 1, wherein a/b takes a value of 1-2.1, preferably 1-1.4.

3. The separator according to claim 1 or 2, wherein $D_v50$ of the composite particles is $\geq 2.5~\mu m$, preferably 2.5 $\mu m$-10 $\mu m$, and more preferably 3 $\mu m$-8 $\mu m$.

4. The separator according to any one of claims 1 to 3, wherein the composite particles comprise a first agglomerate, and the first agglomerate comprises at least two of the inorganic particles.

5. The separator according to claim 4, wherein 0.01 $\mu m \leq D_v50$ of the first agglomerate $\leq D_v10$ of the composite particles.

6. The separator according to any one of claims 1 to 5, wherein the composite particles comprise inorganic particles of primary particle morphology.

7. The separator according to claim 6, wherein $D_v50$ of the inorganic particles of the primary particle morphology is 0.01 $\mu m$-1 $\mu m$, preferably 0.5 $\mu m$-1 $\mu m$.

8. The separator according to any one of claims 1 to 7, wherein the composite particles comprise a second agglomerate, and the second agglomerate comprises at least two of the polyacrylate particles.

9. The separator according to claim 8, wherein $D_v50$ of the second agglomerate is 0.3 $\mu m$-5 $\mu m$, preferably 1 $\mu m$-2 $\mu m$.

10. The separator according to any one of claims 1 to 9, wherein the polyacrylate particles comprise polyacrylate particles of primary particle morphology and/or polyacrylate particles of secondary particle morphology.

11. The separator according to claim 10, wherein $D_v50$ of the polyacrylate particles of the primary particle morphology is 50 nm-400 nm, preferably 100 nm-200 nm.

12. The separator according to claim 10, wherein $D_v50$ of the polyacrylate particles of the secondary particle morphology is 2 $\mu m$-15 $\mu m$, preferably 5 $\mu m$-8 $\mu m$.

13. The separator according to any one of claims 1 to 12, wherein percentage of the inorganic particles in the composite particles is 1wt%-50wt%, optionally 1wt%-40wt%, more optionally 2wt%-15wt%, and most preferably 5wt%-15wt%.

14. The separator according to any one of claims 1 to 13, wherein two-side height of the bulges is 15 $\mu$m-60 $\mu$m.

15. The separator according to any one of claims 1 to 14, wherein the first agglomerate is present on surface of the bulge.

16. The separator according to any one of claims 1 to 15, wherein the polyacrylate particles have a glass transition temperature of 20°C-80°C, preferably 25°C-65°C.

17. The separator according to any one of claims 1 to 16, wherein the composite particles have an area coverage of 10%-25% on the coating.

18. The separator according to any one of claims 1 to 17, wherein the inorganic particles comprise one or more of oxides of silicon, aluminum, calcium, zinc, and magnesium, and sodium sulfate, sodium benzoate, calcium carbonate, and modified materials thereof, optionally one or more of silicon dioxide, silica sol, aluminum oxide, zinc oxide, magnesium oxide, and sodium benzoate, and more optionally one or more of fumed silica, silicon micro-powder, aluminum oxide, and sodium benzoate.

19. The separator according to any one of claims 1 to 18, wherein the binder comprises a binder polymer and a plasticizer.

20. The separator according to claim 19, wherein the binder polymer comprises a copolymer formed by at least one of the following first monomers, at least one of the following second monomers, at least one of the following third monomers, and at least one of the following reactive dispersants:

first monomers, comprising acrylic acid, methacrylic acid, methyl methacrylate, tert-butyl methacrylate, isobomyl methacrylate, methylol acrylamide, acrylamide, styrene, and acrylonitrile;
second monomers, comprising C4-C22 alkyl acrylate, isobutyl acrylate, isooctyl acrylate, tert-butyl acrylate, 2-ethylhexyl acrylate (isooctyl), cyclohexyl acrylate, ethyl methacrylate, isobutyl methacrylate, 2-ethylhexyl methacrylate, n-hexyl methacrylate, cyclohexyl methacrylate, benzyl methacrylate, 2-hydroxyethyl acrylate 2-hydroxypropyl acrylate, ethyl ethylideneurea methacrylate, dicyclopentene ethoxy methacrylate, tetrahydrofuryl methacrylate, trifluoroethyl methacrylate, dimethylaminoethyl methacrylate, diethylaminoethyl methacrylate, ethyl ethylideneurea methacrylate, acryl methacrylate, dicyclopentene ethoxy methacrylate, tetrahydrofuryl methacrylate, and trifluoroethyl methacrylate;
third monomers, comprising 2-hydroxyethyl acrylate, 2-hydroxypropyl acrylate, glycidyl acrylate, glycidyl methacrylate, dimethylaminoethyl methacrylate, diethylaminoethyl methacrylate, vinyltrimethoxysilane, vinyltriethoxysilane, vinyltriisopropoxysilane, 3-methacryloxypropyltrimethoxysilane, N-methylolacrylamide, N-butoxymethyl(meth)acrylamide, diacetoneacrylamide, ethyl methacrylate acetoacetate, divinylbenzene, epoxy resin with an epoxy value of 0.35-0.50, and divinylbenzene; and
reactive dispersants, comprising polyvinyl alcohol, polypropyl alcohol, polypropylene glycol, polyethylene glycol, and polyvinyl acid alcohol.

21. The separator according to claim 19, wherein the plasticizer comprises at least one of glycerol C4-C10 alkyl diether, glycerol C4-C10 alkyl monoether, glycerol C4-C10 carboxylic acid monoester, glycerol C4-C10 carboxylic acid diester, propylene glycol C4-C10 alkyl monoether, and glycerol.

22. The separator according to any one of claims 1 to 21, wherein a mass ratio of the composite particles to a solid content in the binder is (80-90):(5-20), preferably (85-90): (8-15).

23. The separator according to any one of claims 1 to 22, wherein the coating further comprises organic particles, the organic particles comprising at least one of polytetrafluoroethylene particles, polytrifluoroethylene particles, polyvinyl fluoride particles, polyvinylidene fluoride particles, polyethylene particles, polypropylene particles, polyacrylonitrile particles, polyethylene oxide particles, copolymer particles of fluorine-containing alkenyl monomer units and vinyl monomer units, copolymer particles of fluorine-containing alkenyl monomer units and acrylic monomer units, copolymer particles of fluorine-containing alkenyl monomer units and acrylate monomer units, and modified compound particles of the homopolymers or copolymers; and the organic particles and the composite particles form bulges on the surface of the coating.

24. The separator according to claim 23, wherein the organic particles form a third agglomerate.

25. The separator according to claim 24, wherein $D_v50$ of the third agglomerate is 5 $\mu$m-30 $\mu$m, preferably 5.0 $\mu$m-12 $\mu$m.

26. The separator according to claim 24, wherein the third agglomerate comprises organic particles of primary particle morphology, and a gap is present between adjacent two of the organic particles.

27. The separator according to claim 26, wherein $D_v50$ of the organic particles of the primary particle morphology is 50 nm-400 nm, preferably 100 nm-200 nm.

28. The separator according to claim 23, wherein a mass ratio of the composite particles to the organic particles is (20-90):(0-70), preferably (45-90):(0-45).

29. A method for preparing the separator according to any one of claims 1 to 28, comprising the following steps:

    (1) providing a substrate; and
    (2) forming a coating comprising composite particles and a binder on at least a portion of surface of the substrate, wherein the composite particles form bulges on surface of the coating, the composite particles comprise polyacrylate particles and inorganic particles, the inorganic particle is present between at least two of the polyacrylate particles, and crosslinking degree a of the composite particle and mass swelling degree b thereof in an electrolyte satisfy a/b $\geq$ 1 and a $\geq$ 75%.

30. A battery, comprising the separator according to any one of claims 1 to 28 or a separator obtained using the method according to claim 29.

31. An electric apparatus, comprising the battery according to claim 30, wherein the battery is configured to supply electrical energy.

FIG. 1

FIG. 2

FIG. 3

FIG. 4

1

FIG. 5

2

1 1 1 1

FIG. 6

3

FIG. 7

FIG. 8

FIG. 9

**EP 4 395 042 A1**

<table>
<tr><td colspan="2">INTERNATIONAL SEARCH REPORT</td><td>International application No.<br><br>**PCT/CN2023/075964**</td></tr>
<tr><td colspan="3">A.    **CLASSIFICATION OF SUBJECT MATTER**<br><br>    H01M50/409(2021.01)i<br><br>According to International Patent Classification (IPC) or to both national classification and IPC</td></tr>
<tr><td colspan="3">B.    **FIELDS SEARCHED**</td></tr>
<tr><td colspan="3">Minimum documentation searched (classification system followed by classification symbols)<br><br>    IPC：H01M</td></tr>
<tr><td colspan="3">Documentation searched other than minimum documentation to the extent that such documents are included in the fields searched</td></tr>
<tr><td colspan="3">Electronic data base consulted during the international search (name of data base and, where practicable, search terms used)<br><br>    VEN, CNABS, CNTXT, WOTXT, EPTXT, USTXT, CNKI, IEEE: 电池, 隔板, 分隔件, 分离件, 隔膜, 丙烯酸酯, 丙烯酸甲酯, 交联度, 交联指数, 溶胀度, 溶胀率, 凸, battery, separator, acrylate, methyl, crosslink, swell+, link+, rate, ratio, capacity, degree, index, convex</td></tr>
</table>

C.    **DOCUMENTS CONSIDERED TO BE RELEVANT**

| Category* | Citation of document, with indication, where appropriate, of the relevant passages | Relevant to claim No. |
|---|---|---|
| Y | JP 2017027945 A (ASAHI KASEI CORP.) 02 February 2017 (2017-02-02)<br>    description, paragraphs 10-240 | 1-31 |
| Y | CN 105958000 A (DONGGUAN MOFANG NEW ENERGY TECHNOLOGY CO., LTD.) 21 September 2016 (2016-09-21)<br>    description, paragraphs 5-119, and figure 1 | 1-31 |
| A | CN 112142995 A (SHENZHEN DELI NEW MATERIAL TECHNOLOGY CO., LTD.) 29 December 2020 (2020-12-29)<br>    entire document | 1-31 |
| A | US 2007264577 A1 (HITACHI MAXELL K.K. et al.) 15 November 2007 (2007-11-15)<br>    entire document | 1-31 |
| A | US 2015171396 A1 (SONY CORP.) 18 June 2015 (2015-06-18)<br>    entire document | 1-31 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 May 2023** | **24 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/075964** |

| Patent document cited in search report | | | Publication date (day/month/year) | Patent family member(s) | | | Publication date (day/month/year) |
| --- | --- | --- | --- | --- | --- | --- | --- |
| JP | 2017027945 | A | 02 February 2017 | JP | 6893402 | B2 | 23 June 2021 |
| CN | 105958000 | A | 21 September 2016 | None | | | |
| CN | 112142995 | A | 29 December 2020 | None | | | |
| US | 2007264577 | A1 | 15 November 2007 | WO | 2006062153 | A1 | 15 June 2006 |
| | | | | US | 11050095 | B2 | 29 June 2021 |
| | | | | CA | 2586062 | A1 | 15 June 2006 |
| | | | | CA | 2586062 | C | 02 April 2013 |
| | | | | JP | 2006164761 | A | 22 June 2006 |
| | | | | KR | 20070083975 | A | 24 August 2007 |
| | | | | EP | 1826842 | A1 | 29 August 2007 |
| | | | | CN | 101048892 | A | 03 October 2007 |
| | | | | JP | 2008305783 | A | 18 December 2008 |
| | | | | KR | 20090075741 | A | 08 July 2009 |
| US | 2015171396 | A1 | 18 June 2015 | US | 2017069895 | A1 | 09 March 2017 |
| | | | | US | 10243189 | B2 | 26 March 2019 |
| | | | | KR | 20140135956 | A | 27 November 2014 |
| | | | | KR | 101955061 | B1 | 06 March 2019 |
| | | | | WO | 2013133025 | A1 | 12 September 2013 |
| | | | | JPWO | 2013133025 | A1 | 30 July 2015 |
| | | | | JP | 5935872 | B2 | 15 June 2016 |
| | | | | US | 9496534 | B2 | 15 November 2016 |
| | | | | CN | 104160528 | A | 19 November 2014 |

Form PCT/ISA/210 (patent family annex) (July 2022)

**REFERENCES CITED IN THE DESCRIPTION**

**Patent documents cited in the description**

- GB 19466 T
- GB 1907712016 T

- GB 190772016 T
- GB 60402002 T